(19) **Europäisches Patentamt**
**European Patent Office**
**Office européen des brevets**

(11) **EP 2 247 017 A1**

(12) **EUROPEAN PATENT APPLICATION**
published in accordance with Art. 153(4) EPC

(43) Date of publication:
**03.11.2010 Bulletin 2010/44**

(51) Int Cl.:
*H04L 1/16* (2006.01)     *H04B 1/707* (2006.01)
*H04J 11/00* (2006.01)     *H04J 99/00* (2009.01)
*H04L 29/08* (2006.01)

(21) Application number: **09713026.4**

(22) Date of filing: **17.02.2009**

(86) International application number:
**PCT/JP2009/052632**

(87) International publication number:
**WO 2009/104574 (27.08.2009 Gazette 2009/35)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **21.02.2008 JP 2008040229**

(71) Applicant: **Sharp Kabushiki Kaisha**
**Osaka-shi, Osaka 545-8522 (JP)**

(72) Inventors:
• **NOGAMI, Toshizo**
 **Osaka 545-8522 (JP)**

• **YOSHIMOTO, Takashi**
 **Osaka 545-8522 (JP)**
• **YAMADA, Ryota**
 **Osaka 545-8522 (JP)**
• **SHIMEZAWA, Kazuyuki**
 **Osaka 545-8522 (JP)**

(74) Representative: **Müller - Hoffmann & Partner**
**Patentanwälte**
**Innere Wiener Strasse 17**
**81667 München (DE)**

(54) **TRANSMISSION DEVICE, RECEPTION DEVICE, COMMUNICATION SYSTEM, AND COMMUNICATION METHOD**

(57) A reception device which communicates with a transmission device, the reception device including: a reception unit which receives a signal in which a plurality of data signals are multiplexed, from the transmission device; a data signal detection unit which detects transmission data included in the plurality of data signals from the reception signal received by the reception unit, and outputs the detected transmission data and success/failure of transmission data detection for each data signal; a selection unit which selects some of data signals for which the transmission data detection is not successful among the plurality of multiplexed data signals; a success/failure information signal generation unit which generates success/failure information in data signals for which the transmission data detection is successful and the selected data signals; and a report transmission unit which reports the success/failure information to the transmission device.

FIG. 3

EP 2 247 017 A1

**Description**

TECHNICAL FIELD

The present invention relates to a transmission device, a reception device, a communication system and a communication method.
This application claims priority to and the benefit of Japanese Patent Applications No. 2008-040229 filed on February 21, 2008, the disclosure of which is incorporated herein by reference.

BACKGROUND ART

In multi-carrier transmission, a transmission device adds a guard interval (GI) section to reduce effects of multi-path interference. Examples of the multi-carrier transmission scheme include orthogonal frequency division multiplexing (OFDM) and orthogonal frequency division multiple access (OFDMA).
In such an access scheme, when there is an incoming wave over the guard interval section, inter-symbol interference (ISI) or inter-carrier interference (ICI) occurs. The inter-symbol interference (ISI) occurs when a previous symbol enters a fast Fourier transform (FFT) section. The inter-carrier interference (ICI) occurs when a gap between symbols, that is, a signal discontinuity section, enters the FFT section.
A method of preventing characteristic degradation due to the inter-symbol interference (ISI) or the inter-carrier interference (ICI) when there is an incoming wave over the guard interval has been proposed in Patent Document 1. In this conventional technique, after a demodulation operation is performed once, an error correction result (an output of a MAP decoder) is used to create a duplicated signal (replica signal) of an undesired sub-carrier including an inter-symbol interference (ISI) component and an inter-carrier interference (ICI) component. A signal obtained by removing the created duplicated signal from a reception signal is subjected to the demodulation operation again, thereby preventing the characteristic degradation due to the inter-symbol interference (ISI) and the inter-carrier interference (ICI).
As combinations of a multi-carrier transmission scheme and a code division multiplexing (CDM) scheme, a multi carrier-code division multiplexing (MC-CDM) scheme, multi carrier-code division multiple access (MC-CDMA), spread-orthogonal frequency and code division multiplexing (OFCDM), and so on have been proposed.
In these access schemes, a signal subjected to code multiplexing by frequency-direction spreading using orthogonal codes, such as the Walsh-Hadamard codes, is received under a multi-path environment. When there is a frequency variation in a period of the orthogonal codes in this signal, orthogonality between the orthogonal codes is not maintained. This causes multi-code interference (MCI), which causes the characteristic degradation.
A technique of preventing the characteristic degradation due to the collapsed orthogonality between the codes is disclosed in Patent Document 2 and Non-Patent Document 1. In these conventional techniques, a signal other than desired codes is removed using error-corrected or de-spread data in order to cancel inter-code interference due to code multiplexing in MC-CDM communication in a downlink and an uplink, although there is a difference between the downlink and the uplink. According to this, the characteristic is improved.
The conventional techniques are common in that, in order to cancel interferences such as the inter-symbol interference (ISI), the inter-carrier interference (ICI), and the multi-code interference (MCI), a reception device generates an interference signal based on a replica signal generated after demodulating a received signal, and performs interference cancellation. Repetition of this process results in a high-precision replica signal and high-precision interference cancellation.
However, when there are a great amount of interferences such as the inter-symbol interference (ISI), the inter-carrier interference (ICI), and the multi-code interference (MCI), the repetitive process using an interference canceller may not completely remove the interferences, and thus desired data may not be normally demodulated and an error may occur.
Meanwhile, an example of an error control method is hybrid automatic repeat request (HARQ) that is a combination between an automatic repeat request (ARQ) and an error correction coding, such as turbo coding. In particular, chase combining (CC) and incremental redundancy (IR) are known methods of HARQ (Non-Patent Documents 2 and 3). For example, HARQ using CC requires retransmission of a completely identical packet when an error is detected from a reception packet. The two reception packets can be synthesized to improve reception quality. In HARQ using IR, redundant bits are divided and sequentially retransmitted little by little, which increases the number of retransmissions, thus degrading a coding rate and improving the error correction capability.
However, when HARQ is used, an increasing the retransmission packets number cause heavy overhead of a link capacity. It also increases the end-to-end delay time.
Accordingly, throughput during communication between a transmission device and a reception device is degraded.

Patent Document 1: Japanese Unexamined Patent Publication, First Publication No. 2004-221702
Patent Document 2: Japanese Unexamined Patent Publication, First Publication No. 2005-198223

Non-Patent Document 1: Y. Zhou, J. Wang, and M. Sawahashi, "Downlink Transmission of Broadband OFCDM Systems-Part I: Hybrid Detection," IEEE Transaction on Communication, Vol. 53, Issue 4, pp. 718-729, April 2005.
Non-Patent Document 2: D. Chase, "Code combining-A maximum likelihood decoding approach for combing and arbitrary number of noisy packets," IEEE Trans. Commun., vol. COM-33, pp. 385-393, May 1985.
Non-Patent Document 3: J. Hagenauer, "Rate-compatible punctured convolutional codes (RCPC codes) and their application," IEEE Trans. Commun., vol. 36, pp. 389-400, April 1988.

DISCLOSURE OF INVENTION

Problem to be Solved by the Invention

The present invention has been achieved in view of the above circumstances, and it is an object of the present invention to provide a transmission device, a reception device, a communication system, and a communication method capable of suppressing the retransmission packets number of a downlink from the transmission device to the reception device to improve throughput.

Means for Solving the Problem

(1) The present invention has been made to solve the above-described problems. According to an aspect of the present invention, there is provided a transmission device which communicates with a reception device, the transmission device including: a transmission signal generation unit which generates a signal in which a plurality of data signals are multiplexed, from a plurality of transmission data; a transmission unit which transmits the signal generated by the transmission signal generation unit to the reception device; and a report reception unit which receives success/failure information indicating success/failure of transmission data detection for each data signal, the success/failure information being reported from the reception device, wherein the transmission signal generation unit further selects some of the data signals for which the success/failure information indicates transmission data detection failure, and generates retransmission signals for the selected data signals, and the transmission unit further transmits the retransmission signal to the reception device.

(2) In the transmission device according to the aspect of the present invention, the transmission signal generation unit acquires a priority of the transmission data included in each data signal and selects some data signals based on the acquired priority.

(3) In the transmission device according to the aspect of the present invention, the transmission signal generation unit stores the number of retransmissions of the transmission data included in each data signal and selects some data signals based on the retransmission number.

(4) In the transmission device according to the aspect of the present invention, the transmission signal generation unit stores a coding rate of each data signal and selects some data signals based on the coding rate.

(5) The transmission device according to the aspect of the present invention, including a transmission data storage unit which stores the plurality of transmission data, wherein the transmission signal generation unit generates the retransmission signal from the transmission data stored in the transmission data storage unit.

(6) In the transmission device according to the aspect of the present invention, the report reception unit further receives success/failure information indicating success/failure of transmission data re-detection, the success/failure information being reported from the reception device.

(7) In the transmission device according to the aspect of the present invention, the transmission data storage unit deletes transmission data for which the success/failure information indicating success/failure of transmission data re-detection is reported.

(8) In the transmission device according to the aspect of the present invention, the transmission signal generation unit includes a spreading unit which code-spreads the plurality of data signals.

(9) In the transmission device according to the aspect of the present invention, the transmission unit spatially multiplexes and transmits the plurality of data signals.

(10) According to another aspect of the present invention, there is provided a reception device which communicates with a transmission device, the reception device including: a reception unit which receives a signal in which a plurality of data signals are multiplexed, from the transmission device; a data signal detection unit which detects transmission data included in the plurality of data signals from the reception signal received by the reception unit, and outputs the detected transmission data and success/failure of transmission data detection for each data signal; a success/failure information signal generation unit which generates one success/failure information for the plurality of multiplexed data signals; and a report transmission unit which reports the success/failure information to the transmission device.

(11) According to still another aspect of the present invention, there is provided a reception device which communicates with a transmission device, the reception device including: a reception unit which receives a signal in which a plurality of data signals are multiplexed, from the transmission device; a data signal detection unit which detects transmission data included in the plurality of data signals from the reception signal received by the reception unit, and outputs the detected transmission data and success/failure of transmission data detection for each data signal; a selection unit which selects some of data signals for which the transmission data detection is not successful among the plurality of multiplexed data signals; a success/failure information signal generation unit which generates success/failure information in data signals for which the transmission data detection is successful and the selected data signals; and a report transmission unit which reports the success/failure information to the transmission device.

(12) In the reception device according to the aspect of the present invention, the selection unit acquires a priority of the transmission data included in each data signal and selects some data signals based on the acquired priority.

(13) In the reception device according to the aspect of the present invention, the selection unit acquires the number of retransmissions of the transmission data included in each data signal and selects some data signals based on the retransmission number.

(14) In the reception device according to the aspect of the present invention, the selection unit acquires a coding rate of each data signal and selects some data signals based on the coding rate.

(15) In the reception device according to the aspect of the present invention, the selection unit acquires reception quality of each data signal and selects some data signals based on the reception quality.

(16) In the reception device according to the aspect of the present invention, the reception unit further receives a retransmission data signal corresponding to any of the plurality of multiplexed data signals, and the data signal detection unit re-detects the transmission data included in the data signal corresponding to the retransmission data signal among the plurality of multiplexed data signals and a data signal not corresponding to the at least one retransmission data signal, from the reception signal and the retransmission data signal.

(17) In the reception device according to the aspect of the present invention, the data signal detection unit includes: a data signal replica generation unit which generates a data signal replica which is a replica of each data signal; an interference signal replica generation unit which generates an interference signal replica from the data signal replica; an interference removal unit which subtracts the interference signal replica from the reception signal; a signal synthesis unit which synthesizes the reception signals from which the interference signal replica is removed; and a determination unit which performs re-detection of the transmission data included in the plurality of multiplexed data signals from the output of the signal synthesis unit.

(18) In the reception device according to the aspect of the present invention, the signal synthesis unit includes: a demodulation unit which demodulates the reception signal from which the interference signal replica is removed and demodulates the retransmission signal; and a synthesis unit which synthesizes the result of demodulating the reception signal from which the interference signal replica is removed and the result of demodulating the retransmission signal.

(19) In the reception device according to the aspect of the present invention, the demodulation unit outputs likelihood information of the transmission data included in the reception signal from which the interference signal replica is removed and the retransmission signal.

(20) In the reception device according to the aspect of the present invention, the demodulation unit outputs log likelihood ratios of the transmission data included in the reception signal from which the interference signal replica is removed and outputs the retransmission signal, and the synthesis unit synthesizes the results by adding the log likelihood ratio of the transmission data included in the reception signal from which the interference signal replica is removed, to the log likelihood ratio of the transmission data included in the retransmission signal.

(21) In the reception device according to the aspect of the present invention, the interference signal replica generation unit generates an interference signal replica for each of the detected data signals.

(22) In the reception device according to the aspect of the present invention, the interference signal replica generation unit generates interference signal replicas for the data signals excluding an initially detected data signal among the plurality of detected data signals.

(23) In the reception device according to the aspect of the present invention, the report transmission unit reports, to the transmission device, success/failure information for the data signal for which the transmission data re-detection is successful, based on the success/failure of the transmission data re-detection output from the data signal detection unit.

(24) In the reception device according to the aspect of the present invention, the plurality of data signals are code-spread and multiplexed, and the data signal detection unit includes a de-spreading unit which performs a de-spreading on the reception signal.

(25) In the reception device according to the aspect of the present invention, the plurality of data signals are spatially multiplexed streams, and the data signal detection unit includes a stream separation unit which performs stream separation on the reception signal.

(26) According to still another aspect of the present invention, there is provided a communication system including a transmission device and a reception device, wherein the transmission device includes: a transmission signal generation unit which generates a signal in which a plurality of data signals are multiplexed; a transmission unit which transmits the signal generated by the transmission signal generation unit to the reception device; and a report reception unit which receives success/failure information reported from the reception device, wherein the transmission signal generation unit further selects some of the data signals for which the success/failure information indicates detection failure, and generates retransmission signals for the selected data signals, and the transmission unit further transmits the retransmission signals to the reception device, and wherein the reception device includes: a reception unit which receives the signal from the transmission device; a data signal detection unit which detects the plurality of data signals from the reception signal received by the reception unit and outputs the detected data signals and success/failure of signal detection; and a report transmission unit which reports success/failure information indicating the success/failure of the signal detection to the transmission device, wherein the reception unit further receives the retransmission data signal corresponding to any of the plurality of multiplexed data signals, and the data signal detection unit re-detects a data signal for which a signal detection result indicates failure among the plurality of multiplexed data signals, from the reception signal and the retransmission data signal.

(27) According to still another aspect of the present invention, there is provided a communication system including a transmission device and a reception device, wherein the transmission device includes: a transmission signal generation unit which generates a signal in which a plurality of data signals are multiplexed; a transmission unit which transmits the signal generated by the transmission signal generation unit to the reception device; and a report reception unit which receives success/failure information reported from the reception device, wherein the transmission signal generation unit further generates a retransmission signal for the data signal for which the success/failure information indicates detection failure, and the transmission unit further transmits the retransmission signal to the reception device, and wherein the reception device includes: a reception unit which receives the signal from the transmission device; a data signal detection unit which detects the plurality of data signals from the reception signal received by the reception unit and outputs the detected data signals and success/failure of transmission data detection for each data signal; a selection unit which selects some of data signals for which the transmission data detection is not successful among the plurality of multiplexed data signals; a success/failure information signal generation unit which generates success/failure information in data signals for which the transmission data detection is successful and the selected data signals; and a report transmission unit which reports the success/failure information to the transmission device, wherein the reception unit further receives the retransmission data signal corresponding to any of the plurality of multiplexed data signals, and the data signal detection unit re-detects a data signal for which a signal detection result indicates failure among the plurality of multiplexed data signals, from the reception signal and the retransmission data signal.

(28) According to still another aspect of the present invention, there is provided a communication method using a transmission device which communicates with a reception device, the communication method including: generating a signal in which a plurality of data signals are multiplexed, from a plurality of transmission data; transmitting the signal generated through the transmission signal generation to the reception device; and receiving success/failure information indicating success/failure of transmission data detection for each data signal, the success/failure information being reported from the reception device, wherein in the transmission signal generation, selecting some of data signals for which the success/failure information indicates transmission data detection failure, and generating retransmission signals for the selected data signals, and in the transmission, transmitting the retransmission signals to the reception device.

(29) According to still another aspect of the present invention, there is provided a communication method using a reception device which communicates with a transmission device, the communication method including: receiving a signal in which a plurality of data signals are multiplexed, from the transmission device; detecting transmission data included in the plurality of data signals from the reception signal received through the reception, and outputting the detected transmission data and success/failure of transmission data detection for each data signal; selecting some of data signals for which the transmission data detection is not successful among the plurality of multiplexed data signals; generating success/failure information in data signals for which the transmission data detection is successful and the selected data signals; and reporting the success/failure information to the transmission device.

Effect of the Invention

The transmission device, the reception device, the communication system, and the communication method of the present invention are capable of suppressing the retransmission packets number of the downlink from the transmission device to the reception device to improve throughput.

BRIEF DESCRIPTION OF THE DRAWINGS

FIG. 1 is a timing chart showing a communication method according to a first embodiment of the present invention.
FIG. 2 is a schematic block diagram showing a configuration of a transmission device 200 according to a second embodiment of the present invention.

FIG. 3 is a schematic block diagram showing a configuration of a reception device 300 according to the second embodiment of the present invention.

FIG. 4 is a schematic block diagram showing a configuration of an interference canceller unit 310 in the reception device 300 according to the second embodiment of the present invention.

FIG. 5 is a schematic block diagram showing a configuration of an MCI replica generation unit 404 of the interference canceller unit 310 according to the second embodiment of the present invention.

FIG. 6 is a flowchart showing a process in the reception device 300 according to the second embodiment of the present invention.

FIG. 7 is a timing chart showing a series of processes of detection of reception data, report of success/failure information, retransmission, and re-detection of the reception data.

FIG. 8 is another timing chart showing a series of processes of detection of reception data, report of success/failure information, retransmission, and re-detection of the reception data.

FIG. 9 is a timing chart showing a communication method according to a third embodiment of the present invention.

FIG. 10 is a schematic block diagram showing a configuration of a transmission device 1000 according to a fourth embodiment of the present invention.

FIG. 11 is a schematic block diagram showing a configuration of a reception device 1100 according to the fourth embodiment of the present invention.

FIG. 12 is a schematic block diagram showing a configuration of a reception device 1200 according to a fifth embodiment of the present invention.

FIG. 13 is a schematic block diagram showing a configuration of an interference canceller unit 1210 of the reception device 1200 according to the fifth embodiment of the present invention.

FIG. 14 is a schematic block diagram showing a configuration of a transmission device 1400 according to a sixth embodiment of the present invention.

FIG. 15 is a schematic block diagram showing a configuration of a reception device 1500 according to the sixth embodiment of the present invention.

FIG. 16 is a schematic block diagram showing a configuration of an interference canceller unit 1511 of the reception device 1500 according to the sixth embodiment of the present invention.

FIG. 17 is a flowchart showing a process in the reception device 1500 according to the sixth embodiment of the present invention.

Reference Symbols

200, 1000, 1400: transmission device, 201-1 to 201-N, 1001-1 to 1001-N, 1401-1 to 1401-N: code channel signal generation unit, 202, 1002: code multiplexing unit, 203, 1003, 1403: interleaver unit, 204, 1004, 1404: IFFT unit, 205, 1005, 1405: pilot signal generation unit, 206, 1006, 1406: multiplexing unit, 207, 1007, 1407: GI insertion unit, 208, 1008, 1408: radio transmission unit, 209, 1009, 1409-1 to 1409-N: antenna unit, 210, 1010, 1410: radio reception unit, 211, 1011, 1411: separation unit, 212, 1012, 1412: retransmission control unit, 213, 1013, 1413: retransmission control signal generation unit, 214, 1014, 1414: coding unit, 215, 1015, 1415: rate matching unit, 216, 1016, 1416: modulation unit, 217, 1017: spreading unit, 218, 1018: coded bit storage unit, 300, 1100, 1200, 1500: reception device, 301, 1101, 1201, 1501-1 to 1501-N: antenna unit, 302, 1102, 1202, 1503: radio reception unit, 303, 1103, 1203, 1504: separation unit, 304, 1104, 1204, 1505: propagation channel estimation unit, 305, 1105, 1205, 1506: propagation channel estimation value storage unit, 306, 1106, 1206, 1507: GI removal unit, 307, 1107, 1207, 1508: FFT unit, 308, 1108, 1208, 1509: reception signal storage unit, 309, 1109, 1209, 1510: reception packet management unit, 310, 1110, 1210, 1511: interference canceller unit, 311-1 to 311-N, 1111-1 to 1111-N: code channel replica generation unit, 312, 1112, 1212, 1512: bit LLR storage unit, 313, 1113, 1213, 1513: success/failure information signal generation unit, 314, 1114, 1214, 1514: multiplexing unit, 315, 1115, 1215, 1515: radio transmission unit, 316, 1116: symbol replica generation unit, 317, 1117: spreading unit, 401: propagation channel compensation unit, 402: de-interleaver unit, 403: code separation unit, 404, 1304: MCI replica generation unit, 405, 1306, 1603: subtraction unit, 406, 1307-1 to 1307-N: de-spreading unit, 407, 1308, 1607: demodulation unit, 408, 1309, 1608: rate matching unit, 409, 1310, 1609: synthesis unit, 410, 1311, 1610: decoding unit, 501: code multiplexing unit, 502: interleaver unit, 503: transfer function multiplying unit, 1301: propagation channel compensation unit, 1302, 1606: de-interleaver unit, 1303-1 to 1303-N: code separation unit, 1305-1 to 1305-N: code channel replica generation unit, 1502-1 to 1502-M: reception processing unit for each antennas, 1602: reception replica generation unit, 1601-1 to 1601-N: stream detection unit, 1604-1, 1604-2: symbol replica generation unit, 1605: MIMO separation unit

BEST MODE FOR CARRYING OUT THE INVENTION

[First Embodiment]

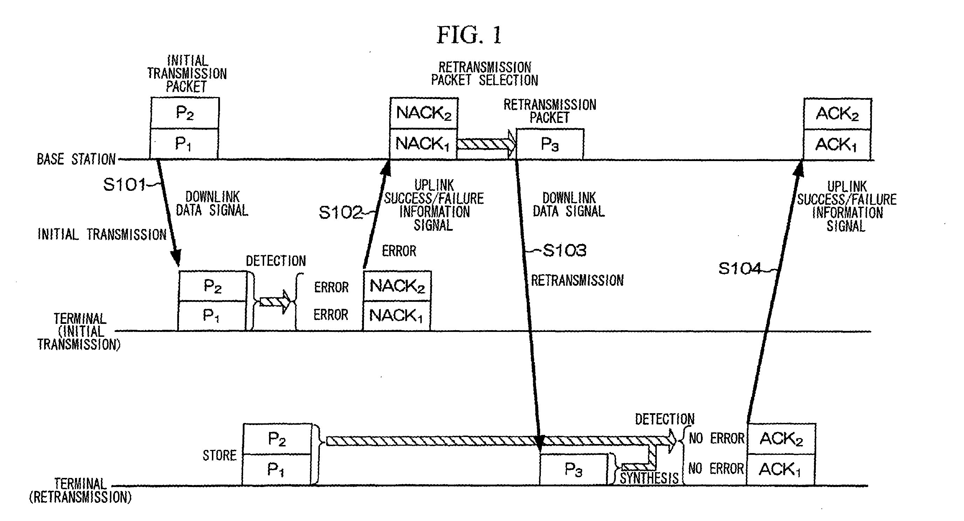

FIG. 1 is a timing chart showing a communication method according to a first embodiment of the present invention. First, a base station (also referred to as a transmission device) multiplexes packets $P_1$ and $P_2$, which are initial transmission packets, and transmits a resultant signal to a terminal (also referred to as a reception device) via a downlink (step S101). The terminal receiving the signal stores the reception signal in which the packets $P_1$ and $P_2$ are multiplexed and performs an interference cancellation process and a data detection process.

The interference refers to the other multiplexed signal. That is, for the packet $P_1$, the packet $P_2$ is an interference component, and for the packet $P_2$, the packet $P_1$ is an interference component. The interference cancellation process is a process of removing the interference using a signal (replica) obtained by reproducing an interference signal from the reception signal. For example, in the interference cancellation process, the packet $P_2$ is detected, a signal obtained by removing the replica of the packet $P_1$ from the reception signal is used.

A case in which errors occur in both the packets $P_1$ and $P_2$ will be described herein. The terminal generates a signal including success/failure information ($NACK_1$ and $NACK_2$) for reporting, to the base station, that the errors occur in the packets $P_1$ and $P_2$. The terminal transmits the success/failure information to the base station via an uplink (step S102).

The base station receiving the success/failure information signal generates a retransmission packet $P_3$ for the packet $P_1$ for which the NACK is returned, and transmits the packet $P_3$ to the terminal (step S103). Here, the base station according to the present embodiment generates retransmission packets for some of a plurality of packets for which the NACK is returned, and transmits the retransmission packets to the terminal.

In this case, some packets may be selected using the following method.

(1) Transmission data included in the respective packets is sequentially transmitted from an upper layer. Retransmission is performed in a transmission order in the upper layer, thereby shortening the average delay time.

(2) A packet including information with high importance (for which small delay is required) is preferentially retransmitted, such that a delay time of a packet with high importance can be shortened.

(3) In the case of incremental redundancy (IR), when a coding rate of an initial transmission packet is high, coding rate degradation due to retransmission packet synthesis is great. For this reason, the initial transmission packet with a high coding rate is preferentially retransmitted, such that a coding gain due to the retransmission can increase and efficient retransmission can be performed.

(4) Packets to be preferentially retransmitted are selected based on the number of retransmissions. For example, a packet with a small retransmission number is preferentially retransmitted such that the average delay time can be shortened. Alternatively, a packet with a great retransmission number is preferentially retransmitted such that the maximum delay time can be shortened.

(5) When reception quality differs from packet to packet, a packet of which the reception quality is low (reception power is small) is preferentially retransmitted such that the overall reception quality can be improved.

The terminal receiving the downlink signal demodulates the retransmission packet $P_3$ and performs the interference cancellation process and the data detection process using the result of demodulating the packet $P_3$ and the stored reception signal in which the packets $P_1$ and $P_2$ are multiplexed. Here, the replica of the other multiplexed packet is removed in the interference cancellation process as described above, thereby improving the detection accuracy. In general, when the retransmission using the HARQ scheme is performed, data detection using the signal obtained by synthesizing the initial transmission packet and the retransmission packet has higher detection accuracy than the data detection using only the initial transmission packet. That is, the retransmission packet synthesis improves the detection accuracy for the packet $P_1$ in comparison with the initial transmission detection, and the high-precision replica of the packet $P_1$ results in a high detection accuracy for the packet $P_2$.

Thus, the quality (error rate) of the packet $P_2$ multiplexed with the initial transmission packet $P_1$ corresponding to the retransmitted packet $P_3$ as well as the packet $P_1$ is improved and there is a possibility that the success/failure result of the packet $P_2$ is different from the result of the initial transmission. A case where there is no error in either of the packets $P_1$ and $P_2$ will be described herein. The terminal generates a signal including success/failure information ($ACK_1$ and $ACK_2$) for reporting, to the base station, that there is no error in the packets $P_1$ and $P_2$. The terminal transmits the generated signal to the base station via the uplink (step S104). It is unnecessary for the base station receiving the $ACK_1$ and the $ACK_2$ to subsequently perform retransmission corresponding to the packets $P_1$ and $P_2$. As a result, it is possible to reduce the error in both of the packets $P_1$ and $P_2$ by retransmitting the packet $P_3$ corresponding to the packet $P_1$. It is also possible to perform data detection in the packets $P_1$ and $P_2$ without retransmission corresponding to the packet $P_2$.

Thus, in the radio communication system of the present embodiment, a plurality of initial transmission packets are multiplexed and transmitted from the transmission device to the reception device, which detects the data while removing the interference (the other multiplexed packet). When the reception device has failed in the data detection, the retransmission packet is transmitted from the transmission device to the reception device using the HARQ scheme. When the reception device has failed in the detection of the plurality of multiplexed initial transmission packets, the transmission device transmits the retransmission packets corresponding to some of the packets to the reception device. The reception device re-detects not only some packets but also the other initial transmission packets for which the reception device has failed in the initial detection. Thus, it is possible to suppress the number of downlink retransmission packets, thereby improving throughput.

[Second Embodiment]

In a second embodiment, a case where a reception side executes the process described in the first embodiment using a repetitive parallel MCI canceller will be described. The repetitive MCI canceller generates an MCI replica at the reception side and suppresses MCI by subtracting the MCI replica from a reception signal.

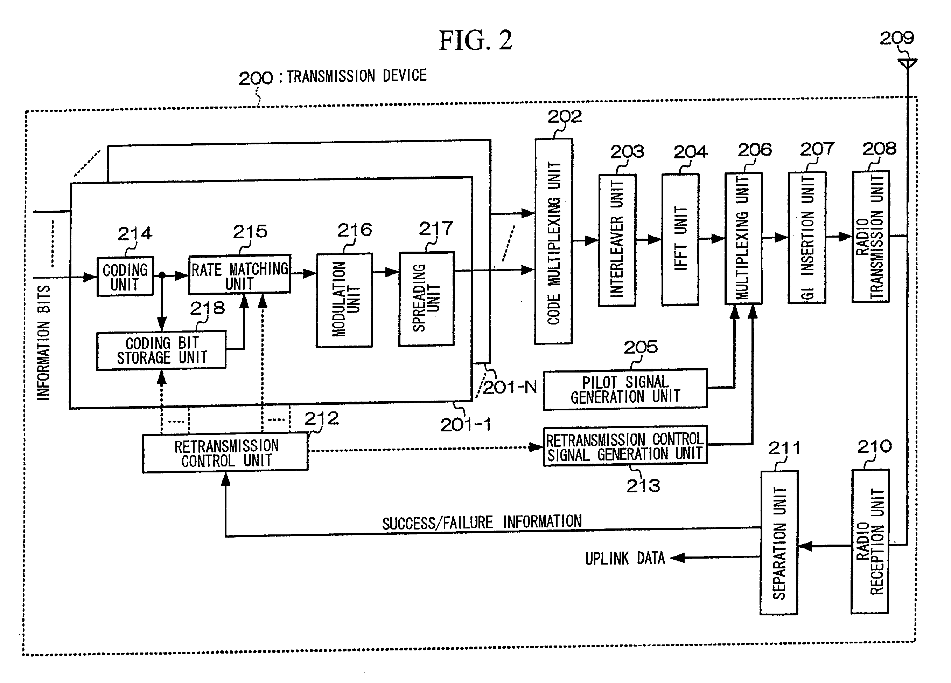

FIG. 2 is a schematic block diagram showing a configuration of a transmission device 200 according to the second embodiment of the present invention. The transmission device 200 includes code channel signal generation units 201-1 to 201-N (where N is a code multiplexing number), a code multiplexing unit 202, an interleaver unit 203, an inverse fast Fourier transform (IFFT) unit 204, a pilot signal generation unit 205, a multiplexing unit 206, a GI (guard interval) insertion unit 207, a radio transmission unit 208, an antenna 209, a radio reception unit 210, a separation unit 211, a retransmission control unit 212, and a retransmission control signal generation unit 113.
The code channel signal generation units 201-1 to 201-N each include a coding unit 214, a rate matching unit 215, a modulation unit 216, a spreading unit 217, and a coded bit storage unit 218.

The code channel signal generation units 201-1 to 201-N (also referred to as transmission signal generation units) generate data signals of respective code channels from information bits (transmission data). First, the coding unit 214 performs a channel coding process on the information bit sequence and outputs a coded bit sequence to the rate matching unit 215 and the coded bit storage unit 218. Here, it is preferable that coding having an error correction capability, such as convolution coding or Reed-Solomon coding is used as channel coding. More preferably, coding having excellent error correction capability, such as turbo coding or low density parity check (LDPC) coding is used.

The rate matching unit 215 performs a puncturing (bit removal) process, a bit padding (bit insertion) process, or a bit repetition process on the coded bits output from the coding unit 214 or the coded bits output from the coded bit storage unit 218 according to a retransmission number output from the retransmission control unit 212. The rate matching unit 215 may also perform a bit interleaving process. An example of the puncturing process will be described below as an example of the rate matching.

The coded bit storage unit 218 (also referred to as a transmission data storage unit) stores the coded bit sequence output from the coding unit 214. The coded bit storage unit 218 deletes the stored coded bit sequence under control of the retransmission control unit 212. This process will be described in detail below. The coded bit storage unit 218 may store the information bits themselves, instead of the output of the coding unit 214.

The modulation unit 216 modulates the coded bit (punctured coded bit) sequence output from the rate matching unit 215, and outputs the modulated symbol sequence to the spreading unit 217. The modulation unit 216 can use a modulation scheme, such as PSK (phase shift keying) or QAM (quadrature amplitude modulation). Preferably, the modulation unit 216 uses a modulation scheme according to a propagation channel between the transmission device 200 and the reception device 300.

The spreading unit 217 duplicates the symbol sequence output from the modulation unit 216 by a spreading factor and multiplies the resultant symbol sequence by a spreading code $C_n$ (n=1 to N) of each code channel to generate a chip sequence (a data signal of each code channel), and outputs the chip sequence to the code multiplexing unit 202.
The code multiplexing unit 202 multiplexes the data signals of the code channels output from the code channel signal generation units 201-1 to 201-N, and outputs a resultant signal to the interleaver unit 203. The interleaver unit 203 performs an interleaving process, such as chip interleaving or symbol interleaving, on the signal output from the code multiplexing unit 202.

The IFFT unit 204 performs an IFFT process on the signal arranged in a frequency direction to convert the signal into a signal in a time domain, and outputs the signal in a time domain to the multiplexing unit 206.
The pilot signal generation unit 205 generates a pilot signal used for propagation channel estimation in the reception device and outputs the pilot signal to the multiplexing unit 206.
The retransmission control signal generation unit 213 generates a signal (retransmission control signal) for notifying the reception device of the retransmission number of each code channel signal reported by the retransmission control unit 212, and outputs the retransmission control signal to the multiplexing unit 206.
The multiplexing unit 206 multiplexes the data signal output from the IFFT unit 204, the pilot signal output from the pilot signal generation unit 205, and the retransmission control signal output from the retransmission control signal generation unit 214, and outputs a resultant signal to the GI insertion unit 207.

The GI insertion unit 207 adds a guard interval to the signal output from the multiplexing unit 206 and the radio transmission unit 208 (also referred to as a transmission unit) wirelessly transmits a resultant signal to the reception device 300 via the antenna 209.

The rate matching unit 215 performs, for example, a puncturing process on the coded bits output from the coding unit 214 or the coded bits output from the coded bit storage unit 218 under control of the retransmission control unit 212 and outputs a resultant signal to the modulation unit 216. Preferably, the rate matching unit 215 performs the puncturing process so that a puncture pattern applied to the coded bits output from the coding unit 215 differs from a puncture pattern applied to the coded bits output from the coded bit storage unit 218.

More preferably, the puncture pattern applied to the coded bits output from the coding unit 214 is such a pattern that the information bits are not removed. Further, the puncture pattern applied to the coded bits output from the coded bit storage unit 220 is such a pattern that the bits removed in the puncture pattern applied to the coded bits output from the coding unit 215 are not removed.

Although the case where the bit removal is necessarily performed has been described, the bits need not be necessarily removed. That is, such a puncture pattern that the bits are not removed may be used.

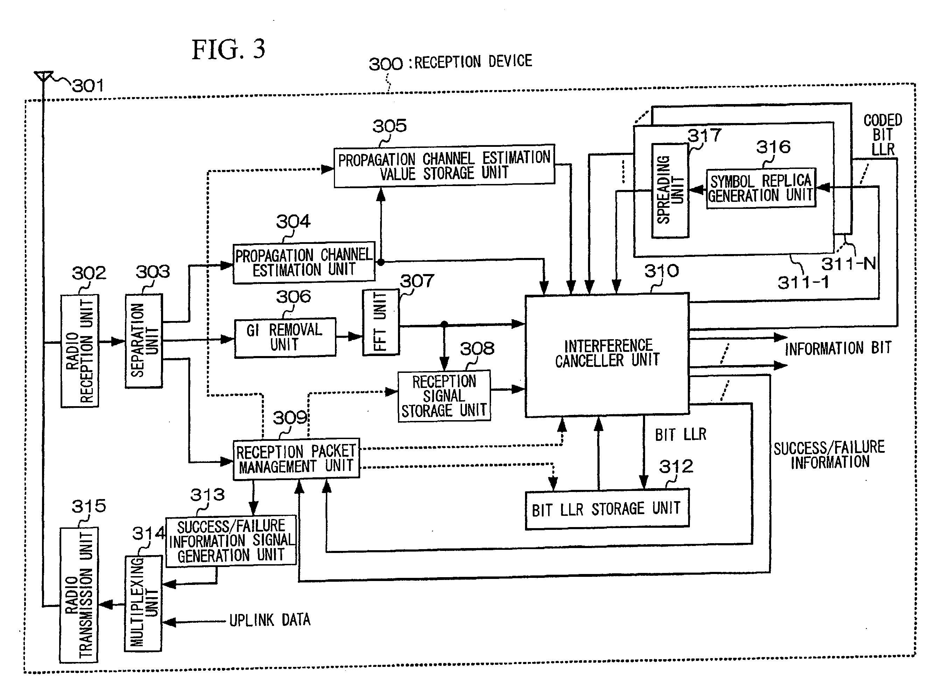

FIG. 3 is a schematic block diagram showing a configuration of the reception device 300 according to the second embodiment of the present invention. The reception device 300 includes an antenna 301, a radio reception unit 302, a separation unit 303, a propagation channel estimation unit 304, a propagation channel estimation value storage unit 305, a GI removal unit 306, an FFT unit 307, a reception signal storage unit 308, a reception packet management unit 309, an interference canceller unit 310, code channel replica generation units 311-1 to 311-N, a bit LLR (log likelihood ratio) storage unit 312, a success/failure information signal generation unit 313, a multiplexing unit 314, and a radio transmission unit 315. The propagation channel estimation unit 304 to the bit LLR storage unit 312 are collectively referred to a data signal detection unit.

The code channel replica generation units 311-1 to 311-N each include a symbol replica generation unit 316 and a spreading unit 317.

First, the signal received by the radio reception unit 302 (also referred to as a reception unit) via the antenna 301 is separated into the pilot signal, the retransmission control information signal, and the data signal by the separation unit 303.

The propagation channel estimation unit 304 estimates a characteristic of a propagation channel between the transmission device 200 and the reception device 300 using the pilot signal separated by the separation unit 303, and outputs a propagation channel estimation value to the propagation channel estimation value storage unit 305 and the interference canceller 310.

The propagation channel estimation value storage unit 305 stores the propagation channel estimation value output from the propagation channel estimation unit 304.

The GI removal unit 306 removes the guard interval from the data signal separated by the separation unit 303 and outputs a resultant signal to the FFT unit 307.

The FFT unit 307 performs an FFT process on the signal output from the GI removal unit 306 to convert the signal in a time domain into the signal in a frequency domain, and outputs the signal in a frequency domain to the reception signal storage unit 308 and the interference canceller 310.

The reception signal storage unit 308 stores the signal in a frequency domain output from the FFT unit 307.

The reception packet management unit 309 outputs various instructions to the interference canceller unit 310, the bit LLR storage unit 312, the reception signal storage unit 308, and the propagation channel estimation value storage unit 305 based on the retransmission control information signal separated by the separation unit 303 and the success/failure information output from the interference canceller unit 310. The reception packet management unit 309 instructs the success/failure information signal generation unit 313 to generate a success/failure information signal. An operation of the reception packet management unit 309 will be described in detail below.

The interference canceller unit 310 detects the information bit sequence from the signal output from the FFT unit 307 while referring to the propagation channel estimation value output from the propagation channel estimation unit 304, based on the instruction of the reception packet management unit 309. The interference canceller unit 310 outputs a coded bit LLR and success/failure information.

When the bit LLR is output from the bit LLR storage unit 312, the interference canceller unit 310 detects the information bits from the reception signal output from the reception signal storage unit 308 using the bit LLR and the propagation channel estimation value output from the propagation channel estimation value storage unit 305. A concrete example of the operation of the interference canceller unit 310 will be described below.

The code channel replica generation units 311-1 to 311-N (also referred to as data signal replica generation units) generate replicas in code channels corresponding to spreading codes $C_1$ to $C_N$. Specifically, the symbol replica generation unit 316 generates the symbol replica based on the coded bit LLR output from the interference canceller unit 310 and outputs the symbol replica to the spreading unit 317.

The symbol replica output from the symbol replica generation unit 316 is duplicated by a spreading factor in the spreading unit 318 and multiplied by the spreading codes $C_1$ to $C_N$ in the code channels to generate the code channel replicas (data signal replicas).

The bit LLR storage unit 312 stores the bit LLR output from the interference canceller unit 310 based on the instruction of the reception packet management unit 309. When the retransmission packet is multiplexed in the reception signal, the bit LLR storage unit 312 outputs the stored bit LLR to the interference canceller unit 310, and stores the bit LLR output from the interference canceller unit 310 again. That is, the bit LLR storage unit 312 replaces the stored bit LLR with the newly output bit LLR.

The success/failure information signal generation unit 313 generates a success/failure information signal based on the instruction of the reception packet management unit (also referred to as a selection unit) 309, and outputs the success/failure information signal to the multiplexing unit 314.

The multiplexing unit 314 multiplexes the success/failure information signal output from the success/failure information signal generation unit 313 with the uplink data signal, and outputs a resultant signal to the radio transmission unit 315.

The radio transmission unit 315 (also referred to as a report transmission unit) transmits the signal to the transmission device 200 via the antenna 301.

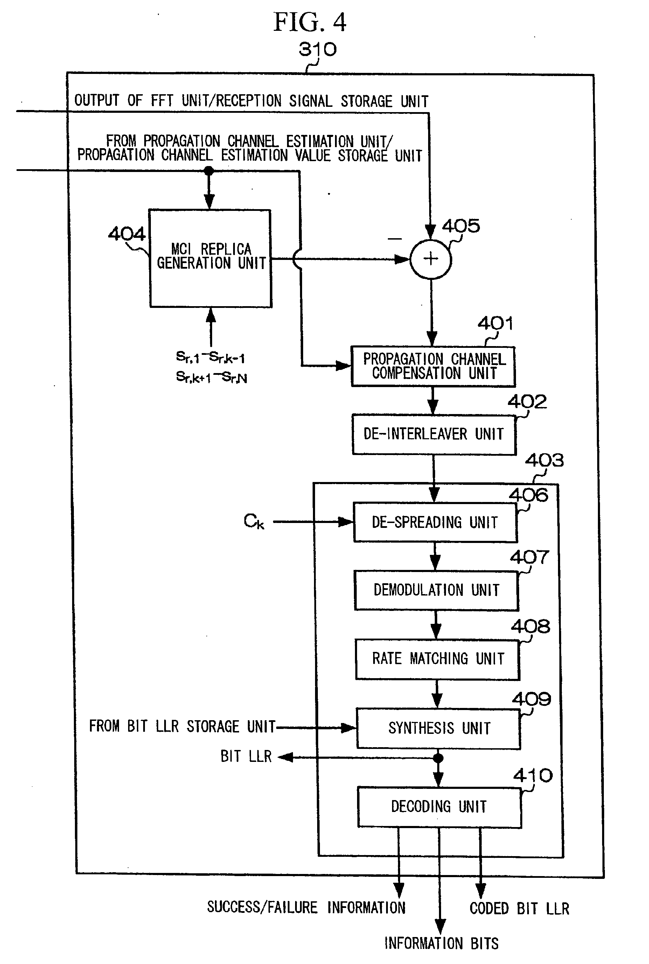

FIG. 4 is a schematic block diagram showing a configuration of the interference canceller unit 310 in the reception device 300 according to the second embodiment of the present invention. A case where a signal of a code channel corresponding to a spreading code $C_k$ is detected will be described herein. A series of processes in the interference canceller unit 310 is repeatedly executed except for a case where all information bits can be detected with no error in an initial detection.

The interference canceller unit 310 includes a propagation channel compensation unit 401, a de-interleaver unit 402, a code separation unit 403, an MCI replica generation unit 404, and a subtraction unit (also referred to as an interference removal unit) 405.

The code separation unit 403 includes a de-spreading unit 406, a demodulation unit 407, a rate matching unit 408, a synthesis unit 409, and a decoding unit (also referred to as a determination unit) 410.

The MCI replica generation unit (also referred to as an interference signal replica generation unit) 404 generates MCI replicas (interference replicas) based on the code channel replicas except for $S_{r,k}$ among code channel replicas $S_{r,1}$ to $S_{r,N}$ output from the code channel replica generation units 311-1 to 311-N and the propagation channel estimation value output from the propagation channel estimation unit 304 (or the propagation channel estimation value storage unit 305), and outputs the MCI replicas to the subtraction unit 405.

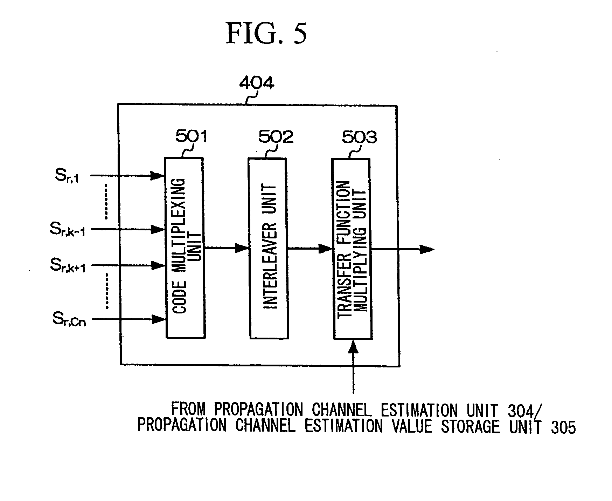

FIG. 5 is a schematic block diagram showing a configuration of the MCI replica generation unit 404 of the interference canceller unit 310 according to the second embodiment of the present invention. Code channel replicas input to the MCI replica generation unit 404 are multiplexed by the code multiplexing unit 501 and interleaved by the interleaver unit 502. The transfer function multiplying unit 503 then multiplies a resultant replica by a transfer function that is calculated from the propagation channel estimation value using interpolation (or that is the propagation channel estimation value itself) to generate an MCI replica.

Since the interleaver unit 502 performs the same process as the interleaver unit 203 (FIG. 2), the interleaver unit 502 can be realized by the same circuit as the interleaver unit 203. It is unnecessary for the MCI replica generation unit 404 to generate the MCI replica in the initial detection.

Referring back to FIG. 4, the subtraction unit 405 subtracts the MCI replica from the output of the FFT unit 307 (or the reception signal storage unit 308) and outputs a resultant signal to the propagation channel compensation unit 401.

The propagation channel compensation unit 401 performs propagation channel compensation on the output of the subtraction unit 405 based on the propagation channel estimation value output from the propagation channel estimation unit 304 (or the propagation channel estimation value storage unit 305), and outputs a resultant signal to the de-interleaver unit 402. Specifically, the propagation channel compensation unit 401 returns a phase rotation due to effects of the propagation channel to an original state. Preferably, the propagation channel compensation unit 401 calculates a MRC (maximum ratio combining) weight, an ORC (orthogonal restoring combining) weight, or a MMSE (minimum mean squared error) weight from the propagation channel estimation value and multiplies the output of the subtraction unit 605 by the calculated weight.

The de-interleaver unit 402 performs a de-interleaving process on the output of the propagation channel compensation unit 401 and outputs a resultant signal to the de-spreading unit 406. It is preferable that the de-interleaving process is a process of rearranging an order rearranged through the interleaving process in the interleaver unit 203 into an original order.

The de-spreading unit 406 performs a de-spreading process using the spreading code $C_k$ to extract the signal of the code channel corresponding to $C_k$ and outputs a de-spread signal to the demodulation unit 407.

The demodulation unit 407 demodulates the de-spread modulated symbol sequence, which is an output signal of the de-spreading unit 406, extracts the signal of each bit, and outputs a resultant signal to the rate matching unit 408.

Preferably, the demodulation unit 407 outputs an LLR (log likelihood ratio) for each bit. Accordingly, hereinafter, a case where the bit LLR (the LLR of each bit) is output as result of demodulation in the demodulation unit 407 will be described. The propagation compensation unit 401, the demodulation unit 407, and the rate matching unit 408 are collectively referred to as a demodulation unit.

A case where QPSK (quadrature phase shift keying) modulation is used will be described herein as an example in which the bit LLR is obtained. On the assumption that a bit sequence upon transmitting a reception signal S' is $b_0$, $b_1$ (where $b_0$ and $b_1$ are 1 or -1), a transmission signal S obtained by QPSK-modulating the bit sequence $b_0$, $b_1$ is expressed as Equation (1):

[Equation 1]

$$s = \frac{1}{\sqrt{2}}\left(b_0 + jb_1\right) \qquad \cdots (1)$$

Here, j denotes an imaginary unit. $\lambda_1(b_0)$ that is the bit LLR of $b_0$ is expressed by Equation (2).

[Equation 2]

$$\lambda_1\left(b_0\right) = \frac{2\,Re\left(S'\right)}{\sqrt{2}\left(1 - \mu\right)} \qquad \cdots (2)$$

The bit LLR of $b_1$ is obtained by exchanging a real part and an imaginary part in Equation (2). Here, Re(x) denotes a real part of a complex number x and $\mu$ denotes equivalent amplitude of the reception signal, that is, a value serving as an amplitude reference for the reception signal.

In this case, a symbol replica $S_r'$ may be calculated using Equation (3) in the process of the symbol replica generation unit 316.

[Equation 3]

$$S_r' = \frac{1}{\sqrt{2}}tanh\left(\lambda_2\left(b_0\right)/2\right) + \frac{j}{\sqrt{2}}tanh\left(\lambda_2\left(b_1\right)/2\right) \qquad \cdots (3)$$

In Equation 3, the bit LLR constituting the symbol replica $S_r'$ is $\lambda_2(b_0)$ and $\lambda_2(b_1)$. Here, $\lambda_2()$ is the output of the demodulation unit 407.

The rate matching unit 408 performs inverse processes of the puncturing (bit removal), the bit padding (bit insertion), or the bit repetition process, which are performed by the rate matching unit 215 in the transmission device 200. That is, the rate matching unit 408 performs a bit de-puncturing (bit LLR insertion) process on the punctured bits, performs a bit removal process on the bits subjected to the bit padding (bit insertion) process, and performs a bit LLR synthesis on the bits subjected to the bit repetition.

When the packet is the initial transmission packet or the first retransmission packet, the synthesis unit 409 outputs the bit LLR, which is an output of the rate matching unit 408, as it is. Meanwhile, when the packet is the second retransmission packet or a subsequent retransmission packet, the synthesis unit 409 synthesizes the bit LLR stored in the bit LLR storage unit 312 (the bit LLR in the corresponding initial transmission packet) and the bit LLR output from the rate matching unit 408, and outputs a resultant signal. The bit LLR output from the synthesis unit 409 is input to the decoding unit 410. When the packet is the retransmission packet, the output bit LLR is sent and overwritten to the bit LLR storage unit 312. The propagation compensation unit 401, the demodulation unit 407, the rate matching unit 408, and the synthesis unit 409 are collectively referred to as a signal synthesis unit.

The decoding unit 410 performs a decoding process using the bit LLR output from the synthesis unit 409 and outputs an information bit, which is the decoding result, success/failure information indicating whether an error is included in the information bit, and the coded bit LLR. When the error is included, the decoding unit 410 may not output the information bit but may output the coded bit LLR, and when the error is not included, the decoding unit 410 may not output the coded bit LLR but may output the information bit.

For the detection of the error in the information bit, for example, the transmission side may add a CRC (cyclic redundancy check) to the information bit and the reception side may perform error detection.

Next, a process of transmitting an uplink signal from the reception device 300 to the transmission device 200 will be described with reference to FIG. 2.

A signal transmitted from the reception device 300 is received by the radio reception unit 210 (also referred to as a report reception unit) via the antenna 209 and output to the separation unit 211.

The separation unit 211 separates the reception signal into the uplink data and the success/failure information.

The retransmission control unit 212 prepares to transmit a retransmission packet (retransmission data signal) based on the success/failure information separated from the uplink data in the separation unit 211. When the success/failure information is information indicating reception failure (NACK), the retransmission control unit 212 instructs the coded bit storage unit 218 to output a coded bit sequence corresponding to the packet for which the NACK is returned. The retransmission control unit 212 also instructs the rate matching unit 215 to perform a rate matching process on the coded bit sequence output from the coded bit storage unit 218.

While the rate matching process may be the same as that in the initial transmission, it is preferable that the rate matching process is changed according to the retransmission number. Moreover, the retransmission control unit 212 notifies the retransmission control signal generation unit 213 of information indicating the number of retransmissions of multiplexed packets, and the retransmission control signal generation unit 213 generates a signal indicating such information (a retransmission control signal) and outputs the retransmission control signal to the multiplexing unit 206. While it is preferable that the information indicating the retransmission number for the multiplexed packets is information indicating the number itself, the information may be information obtained by processing the retransmission number, such as simple information indicating whether a transmission is the initial transmission or the retransmission. When the success/failure information is information indicating reception success (ACK), the retransmission control unit 212 instructs the coded bit storage unit 218 to release a memory area where a coded bit sequence corresponding to a packet for which the ACK is returned is stored.

While the retransmission control unit 212 instructs the coded bit storage unit 218 to output the coded bit sequence corresponding to the packet for which the NACK is returned, the retransmission control unit 212 instructs selection of some packets rather than all packets for which the NACK is returned and perform retransmission. In this case, some packets may be selected using the following method.

(1) Transmission data included in the respective packets is sequentially transmitted from an upper layer. Retransmission is performed in a transmission order in the upper layer, thereby shortening the average delay time. In order to realize this, the retransmission control unit 212 stores the order in which the transmission data included in the respective packets is transmitted from the upper layer.

(2) A packet including information with high importance (for which small delay is required) is preferentially retransmitted, such that a delay time of a packet with high importance can be shortened. In order to realize this, the retransmission control unit 212 acquires the importance (required delay) of each packet in response to a control signal from the upper layer.

(3) In the case of incremental redundancy (IR), when a coding rate of an initial transmission packet is high, coding rate degradation due to retransmission packet synthesis is great. For this reason, the initial transmission packet with a high coding rate is preferentially retransmitted, such that a coding gain due to the retransmission can increase and efficient retransmission can be performed.

(4) Packets to be preferentially retransmitted are selected based on the number of retransmissions. For example, a packet with a small retransmission number is preferentially retransmitted, such that the average delay time can be shortened. Alternatively, a packet with a great retransmission number is preferentially retransmitted, such that the maximum delay time can be shortened.

(5) When reception quality differs from packet to packet, a packet of which the reception quality is low (reception power is small) is preferentially retransmitted, such that the overall reception quality can be improved. In order to realize this, the reception device 300 measures the reception quality of each packet and reports the measurement result to the transmission device 200 via the uplink.

The bit LLR stored in the bit LLR storage unit 312, which is the result of demodulating the retransmission packet, is used for the process of extracting the information bits from the initial transmission packets included in a previous reception signal, which includes the initial transmission packets corresponding to the retransmission packets.

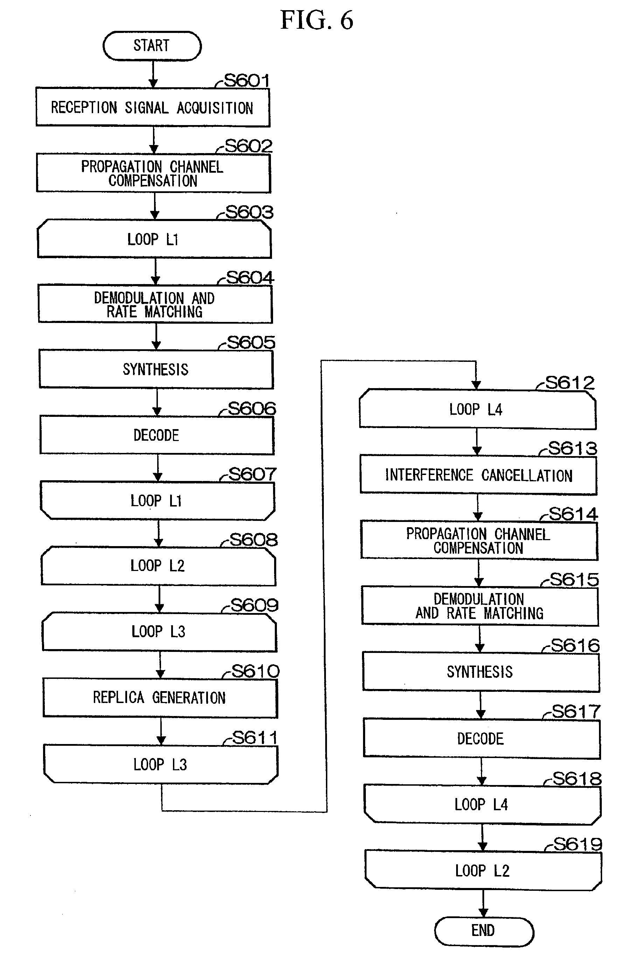

FIG. 6 is a flowchart showing a process in the reception device 300 according to the second embodiment of the present invention. FIG. 6 shows an example of the process of extracting the information bits from the initial transmission packet included in the previous reception signal, which includes the initial transmission packets corresponding to the retransmission packets, and the control performed by the reception packet management unit 309.

First, the previous reception signal including the initial transmission packet corresponding to the retransmission packet is acquired from the reception signal storage unit 308 (step S601), and the propagation channel compensation unit 401 performs propagation channel compensation using the propagation channel estimation value obtained upon receiving the reception signal, which is stored in the propagation channel estimation value storage unit 305 (step S602). The reception signal subjected to the propagation channel compensation may be stored. In this case, such propagation channel compensation may not be performed.

A process (steps S603 to S607 in a loop L1) for the initial transmission packet corresponding to the retransmission packet is then executed. For the initial transmission packet, the signal subjected to the propagation channel compensation is first processed by the de-interleaver unit 402 and the de-spreading unit 406 and then subjected to a demodulation process and a rate matching process in the demodulation unit 407 and the rate matching unit 408 to obtain a coded bit LLR (step S604). The coded bit LLR obtained in step S604 and the coded bit LLR of the retransmission packet corresponding to the initial transmission packet are then synthesized by the synthesis unit 409 (step S605). The decoding unit 410 performs decoding using the coded bit LLR obtained through the synthesis (step S606).

A repetitive interference cancellation process (steps S608 to S619 in a loop L2) using the previous reception signal is then performed. First, in a process (steps S609 to S611 in a loop L3) for the respective initial transmission packets included in the previous reception signal, the code channel replica generation unit 311 generates a code channel replica of each initial transmission packet from the coded bit LLR (e.g., the coded bit LLR obtained through the synthesis in step S605).

A second or subsequent detection process (steps S612 to S618 in a loop L4) for each initial transmission packet included in the previous reception signal is then performed. That is, the subtraction unit 405 cancels the code channel replica in the code channel excluding the own code channel generated in step S610 (step S613). The propagation channel compensation unit 401 performs propagation channel compensation on the remaining signals (step S614), and the demodulation unit 407 and the rate matching unit 408 perform the demodulation process and the rate matching process, respectively, to calculate the coded bit LLR (step S615).

Next, the synthesis unit 409 synthesizes the calculated coded bit LLR and the coded bit LLR of the retransmission packet (step S616). The decoding unit 410 performs decoding using the synthesized coded bit LLR (step S617) to extract the information bits from the initial transmission packet included in the previous reception signal. In this case, it is preferable that the replica of the retransmission packet included in the previous reception signal is also cancelled in the code channel replica cancellation of step S613.

While one retransmission is performed as described above, the present invention is not limited thereto and the present embodiment may be applied to a system in which a plurality of retransmissions are performed.

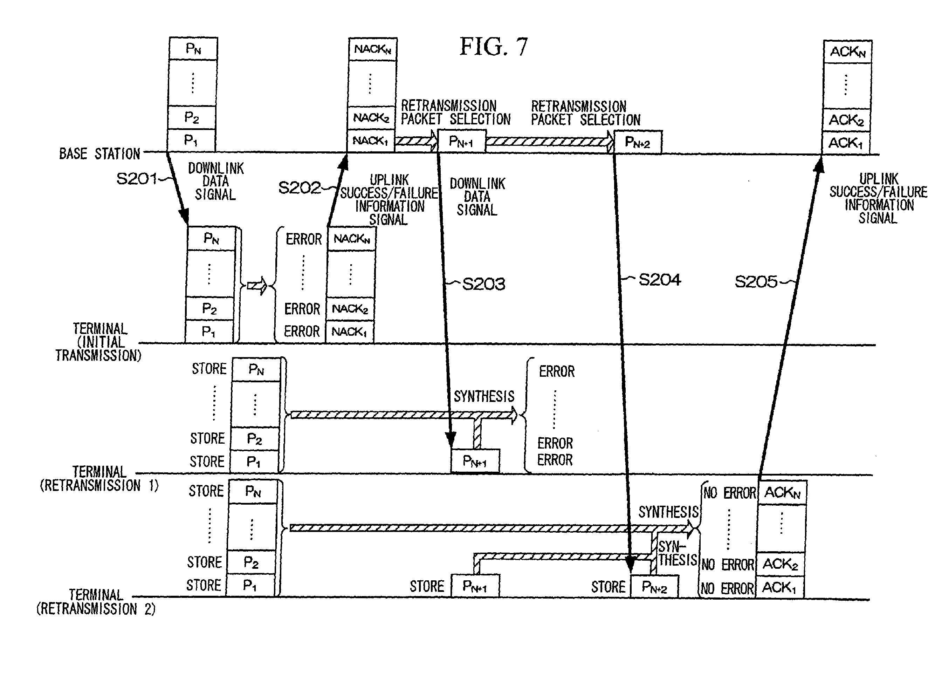

FIG. 7 is a timing chart showing a series of processes of detection of the reception data, report of the success/ failure information, retransmission, and re-detection of the reception data.

First, a base station (a transmission device) multiplexes initial transmission packets $P_1$ to $P_N$ and transmits a resultant signal to a terminal (a reception device) via a downlink (step S201). The terminal receiving the signal stores the reception signal in which the packets $P_1$ to $P_N$ are multiplexed and performs an interference cancellation process and a data detection process.

Here, a case where errors occur in all the packets $P_1$ to $P_N$ will be described. The terminal generates a signal including success/failure information ($NACK_1$ to $NACK_N$) for reporting, to the base station, that the errors occur in the packets $P_1$ to $P_N$, and transmits the signal to the base station via an uplink (step S202).

The base station receiving the success/failure information signal selects a packet $P_1$ from among the packets $P_1$ to $P_N$ for which the NACK is returned, generates a retransmission packet $P_{N+1}$ for the packet $P_1$, multiplexes the retransmission packet with the other downlink packet, and transmits a resultant signal to the terminal (step S203). Thus, the base station generates the retransmission packets for some of the packets for which the NACK is returned, and transmits the retransmission packets to the terminal (step S203).

The terminal receiving the downlink signal stores the result of demodulating the retransmission packet $P_{N+1}$, and performs an interference cancellation process and a data detection process using the result of demodulating the packet $P_{N+1}$ and the stored reception signal in which the packets $P_1$ to $P_N$ are multiplexed. A case where errors occur in all the packets $P_1$ to $P_N$ will be described herein.

Since the success/failure information for the initial transmission packets has been already reported from the terminal to the base station, success/failure information for the second and later times may not necessarily be transmitted. A case where NACK information for the second and later times is not transmitted will be described herein. The base station may regard the NACK as being received as long as the ACK is not returned, and perform the process.

When a predetermined time has lapsed with the success/failure information not being received, the base station generates the second retransmission packet $P_{N+2}$ for the packet $P_1$, multiplexes the retransmission packet with another downlink packet, and transmits a resultant signal to the terminal.

The terminal receiving the downlink signal synthesizes the result of demodulating the retransmission packet $P_{N+2}$ and the stored result of demodulating the packet $P_{N+1}$. The terminal then performs an interference cancellation process and a data detection process using the synthesis result and the stored reception signal in which the packets $P_1$ to $P_N$ are multiplexed. A case where there is no error in all the packets $P_1$ to $P_N$ will be described herein. The terminal generates a signal including success/failure information ($ACK_1$ to $ACK_N$) for reporting, to the base station, that there is no error in the packets $P_1$ to $P_N$, and transmits the signal to the base station via the uplink.

It is unnecessary for the base station receiving the $ACK_1$ to the $ACK_N$ to subsequently perform retransmission corresponding to the packets $P_1$ to $P_N$. As a result, it is possible to reduce errors in the packets $P_1$ to $P_N$ by retransmitting the packets $P_{N+1}$ and $P_{N+2}$ corresponding to the packet $P_1$, making the data detection in the packets $P_1$ to $P_N$ possible without retransmission corresponding to the packets $P_2$ to $P_N$.

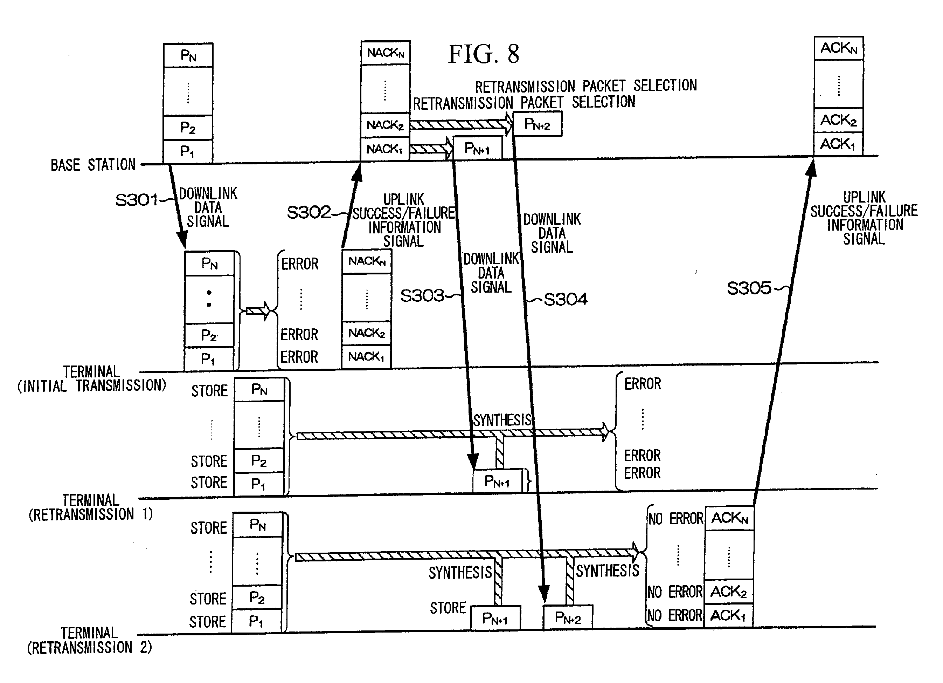

FIG. 8 is another timing chart showing a series of processes of the detection of the reception data, the report of the success/failure information, the retransmission, and the re-detection of the reception data.

First, a base station multiplexes packets $P_1$ to $P_N$, which are initial transmission packets, and transmits a resultant signal to a terminal via a downlink (step S301). The terminal receiving the signal stores the reception signal in which the packets $P_1$ to $P_N$ are multiplexed and performs an interference cancellation process and a data detection process. A case where errors occur in all the packets $P_1$ to $P_N$ will be described herein. The terminal generates a signal including success/failure information ($NACK_1$ to $NACK_N$) for reporting, to the base station, that the errors occur in the packets $P_1$ to $P_N$, and transmits the signal to the base station via an uplink (step S302).

The base station receiving the success/failure information signal selects the packet $P_1$ from among the packets $P_1$ to $P_N$ for which the NACK is returned, generates a retransmission packet $P_{N+1}$ for the packet $P_1$, multiplexes the retransmission packet with another downlink packet, and transmits a resultant signal to the terminal (step S303). Thus, the base station may generate the retransmission packets for some of the packets for which the NACK is returned, and transmit the retransmission packets to the terminal.

The terminal receiving the downlink signal stores the result of demodulating the retransmission packet $P_{N+1}$, and performs an interference cancellation process and a data detection process using the result of demodulating the packet $P_{N+1}$ and the stored reception signal in which the packets $P_1$ to $P_N$ are multiplexed. A case where errors occur in all the packets $P_1$ to $P_N$ will be described herein. Since the success/failure information for the initial transmission packet has already been reported from the terminal to the base station, success/failure information for the second and later times may not necessarily be transmitted. A case where NACK information after the second and later times is not transmitted will be described herein.

After transmitting the retransmission packet $P_{N+1}$ to the terminal, the base station selects the packet $P_2$ from among the packets $P_1$ to $P_N$ when a predetermined time lapses with the success/failure information not being received, generates a retransmission packet $P_{N+2}$ for the packet $P_2$, multiplexes the retransmission packet with another downlink packet, and transmits a resultant signal to the terminal (step S304).

The terminal receiving the downlink signal performs an interference cancellation process and a data detection process using the result of demodulating the retransmission packet $P_{N+2}$, the stored packet $P_{N+1}$, and the stored reception signal in which the packets $P_1$ to $P_N$ are multiplexed. A case where there are no errors in any of the packets $P_1$ to $P_N$ will be described herein.

The terminal generates a signal including success/failure information ($ACK_1$ to $ACK_N$) for reporting, to the base station, that there are no errors in the packets $P_1$ to $P_N$ and transmits the signal to the base station via the uplink (step S305). It is unnecessary for the base station receiving $ACK_1$ to $ACK_N$ to subsequently perform retransmission corresponding to the packets $P_1$ to $P_N$. As a result, it is possible to reduce the errors in the packets $P_1$ to $P_N$ by retransmitting the packet $P_{N+1}$ corresponding to the packet $P_1$ and the packet $P_{N+2}$ corresponding to the packet $P_2$ to the terminal. It is also possible to perform the data detection in the packets $P_1$ to $P_N$ without retransmission corresponding to the packets $P_3$ to $P_N$.

Thus, in the radio communication system of the present embodiment, the transmission device multiplexes the plurality of initial transmission packets and transmits a resultant signal to the reception device, which detects the data while removing the interference (the other multiplexed packet). When the reception device has failed in the data detection, the transmission device transmits the retransmission packet to the reception device. When the reception device has failed in the detection of the plurality of multiplexed initial transmission packets, the transmission device transmits retransmission packets corresponding to some packets to the reception device. The reception device re-detects not only some packets but also the other initial transmission packets for which the reception device has failed in the initial detection. When the detection is successful, the reception device transmits information indicating the detection success to the base station.

Thus, it is possible to suppress the number of downlink retransmission packets, thereby improving throughput.

[Third Embodiment]

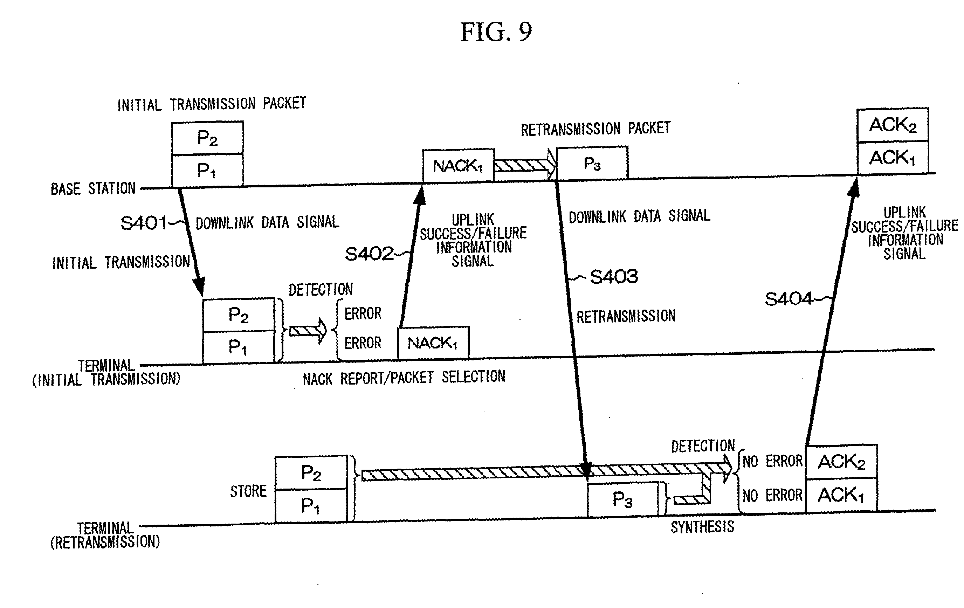

FIG. 9 is a timing chart showing a communication method according to a third embodiment of the present invention.

First, a base station (transmission device) multiplexes packets $P_1$ and $P_2$, which are initial transmission packets, and transmits a resultant packet to a terminal (reception device) via a downlink (step S401). The terminal receiving the signal stores the reception signal in which the packets $P_1$ and $P_2$ are multiplexed, and performs an interference cancellation process and a data detection process. The other multiplexed signal becomes an interference component. That is, for the packet $P_1$, the packet $P_2$ is an interference component, and for the packet $P_2$, the packet $P_1$ is an interference component. The interference cancellation process is a process of removing the interference component using a signal (replica) obtained by reproducing an interference signal from the reception signal. In the interference cancellation process, when, for example, the packet $P_2$ is detected, a signal obtained by removing the replica of the packet $P_1$ from the reception signal is used.

A case where errors occur in both the packets $P_1$ and $P_2$ will be described herein. The terminal generates a signal including success/failure information ($NACK_1$ and $NACK_2$) for reporting, to the base station, that errors occur in the packets $P_1$ and $P_2$, and transmits the signal to the base station via an uplink. Here, the terminal according to the present embodiment generates a NACK for some of the packets in which an error occurs and reports the NACK to the base station. Here, the terminal generates a signal including success/failure information ($NACK_1$) for the packet $P_1$, and transmits the signal to the base station via the uplink (step S402).

In this case, some packets may be selected using the following method.

(1) A NACK for a packet including information with high importance (for which small delay is required) is preferentially returned, such that a delay time of a packet with high importance can be shortened.

(2) In the case of incremental redundancy (IR), when a coding rate of an initial transmission packet is high, coding rate degradation due to retransmission packet synthesis is great. For this reason, the NACK for the initial transmission packet with a high coding rate is preferentially returned, such that a coding gain due to the retransmission can increase and efficient retransmission can be performed.

(3) Packets for which the NACK is preferentially returned are selected based on the number of retransmissions. For example, the NACK for a packet with a small retransmission number is preferentially returned, such that the average delay time can be shortened. Alternatively, the NACK for a packet with a great retransmission number is preferentially returned, such that the maximum delay time can be shortened.

(4) When reception quality differs from packet to packet, the NACK for a packet of which the reception quality is low (reception power is small) is preferentially returned, such that the overall reception quality can be improved.

(5) The NACK for a packet of which the coded bit LLR value that is a decoding result is small is preferentially returned, such that the decoding accuracy of a packet, which has poor decoding accuracy, can be improved.

The base station receiving the success/failure information signal generates a retransmission packet $P_3$ for the packet $P_1$ for which the NACK is returned, and transmits the retransmission packet to the terminal (step S403).

The terminal receiving the downlink signal demodulates the retransmission packet $P_{N+1}$ and performs an interference cancellation process and a data detection process using the result of demodulating the packet $P_3$ and the stored reception signal in which the stored packets $P_1$ and $P_2$ are multiplexed. Here, the replica of the other multiplexed packet is removed in the interference cancellation process as described above, thereby improving the detection accuracy. In general, when the retransmission using the HARQ scheme is performed, data detection using the signal obtained by synthesizing the initial transmission packet and the retransmission packet provides higher detection accuracy than the data detection using only the initial transmission packet. That is, the retransmission packet synthesis improves the detection accuracy for the packet $P_1$ in comparison with the initial transmission detection, and the high-precision replica of the packet $P_1$ results in high detection accuracy for the packet $P_2$.

Thus, the quality (e.g., error rate) of the packet $P_2$ multiplexed with the initial transmission packet $P_1$ corresponding to the retransmitted packet $P_3$ as well as the packet $P_1$ is improved, such that there is a possibility that the success/failure result for the packet $P_2$ is different from the result of the initial transmission. A case where there is no error in either of the packets $P_1$ and $P_2$ will be described herein.

The terminal generates a signal including success/failure information ($ACK_1$ and $ACK_2$) for reporting, to the base station, that there is no error in the packets $P_1$ and $P_2$, and transmits the signal to the base station via the uplink. It is unnecessary for the base station receiving the $ACK_1$ and the $ACK_2$ to subsequently perform retransmission corresponding to the packets $P_1$ and $P_2$. As a result, it is possible to reduce the error in both of the packets $P_1$ and $P_2$ by returning only the NACK corresponding to the packet $P_1$ and retransmitting the packet $P_{N+1}$, making data detection in the packets $P_1$ and $P_2$ possible without retransmission corresponding to the packet $P_2$.

Thus, in the radio communication system of the present embodiment, a plurality of initial transmission packets are multiplexed and transmitted from the transmission device to the reception device, which detects the data while removing the interference (the other multiplexed packet). When the reception device has failed in the data detection, the retransmission packet is transmitted from the transmission device to the reception device using the HARQ scheme. When the reception device has failed in the detection of the plurality of multiplexed initial transmission packets, the reception device reports information indicating detection failure corresponding to some of the packets to the base station. The reception device re-detects not only some packets but also the other initial transmission packets for which the reception device has failed in the initial detection. Thus, it is possible to suppress the number of downlink retransmission packets, thereby improving throughput.

In the present embodiment, when the reception device has failed in the detection of a plurality of multiplexed initial transmission packets, the reception device reports the information indicating detection failure corresponding to some of the packets, as described above. From another perspective, the reception device selects one of three pieces of success/failure information for each packet and reports the selected information piece to the base station. That is, the three pieces of information include an ACK, a NACK, and a non-transmission. When the data detection is successful, the reception device selects the ACK and transmits the ACK to the base station, and when the data detection is not successful, the reception device selects either of the NACK transmission and the non-transmission. The NACK is a signal indicating data detection failure and requesting retransmission. The non-transmission is a signal indicating a data detection failure and a request to suspend the retransmission. That is, in the present embodiment, the non-transmission is selected to indicate the data detection failure and the request to suspend the retransmission, as described above.

In this regard, a signal other than the ACK/NACK may be transmitted instead of the non-transmission selected to indicate the data detection failure and the request to suspend the retransmission. In the present embodiment, the NACK and the non-transmission may reverse their roles. That is, the NACK may indicate that data detection has failed and the retransmission is suspended and the non-transmission may indicate that the data detection has failed and the retransmission is requested.

[Fourth Embodiment]

In the second embodiment, the reception side performs the process described in the first embodiment using the repetitive parallel MCI canceller, as described above. In the fourth embodiment, a case where the reception side performs the process described in the third embodiment using the repetitive parallel MCI canceller will be described.

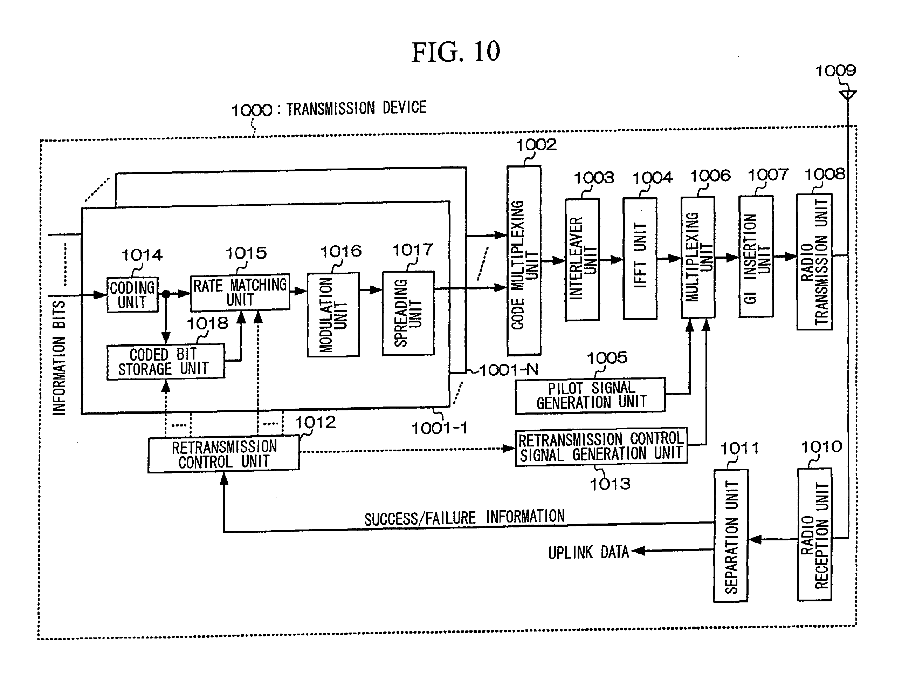

FIG. 10 is a schematic block diagram showing a configuration of a transmission device 1000 according to the fourth embodiment of the present invention. The transmission device 1000 includes code channel signal generation units 1001-1 to 1001-N (where, N is a code multiplexing number), a code multiplexing unit 1002, an interleaver unit 1003, an IFFT unit 1004, a pilot signal generation unit 1005, a multiplexing unit 1006, a GI insertion unit 1007, a radio transmission unit 1008, an antenna 1009, a radio reception unit 1010, a separation unit 1011, a retransmission control unit 1012, and a retransmission control signal generation unit 1013.

The code channel signal generation units 1001-1 to 1001-N each include a coding unit 1014, a rate matching unit 1015, a modulation unit 1016, a spreading unit 1017, and a coded bit storage unit 1018.

The respective blocks, excluding the retransmission control unit 1012, shown in FIG. 10 may be realized in the same configuration as those with the same names in FIG. 2.

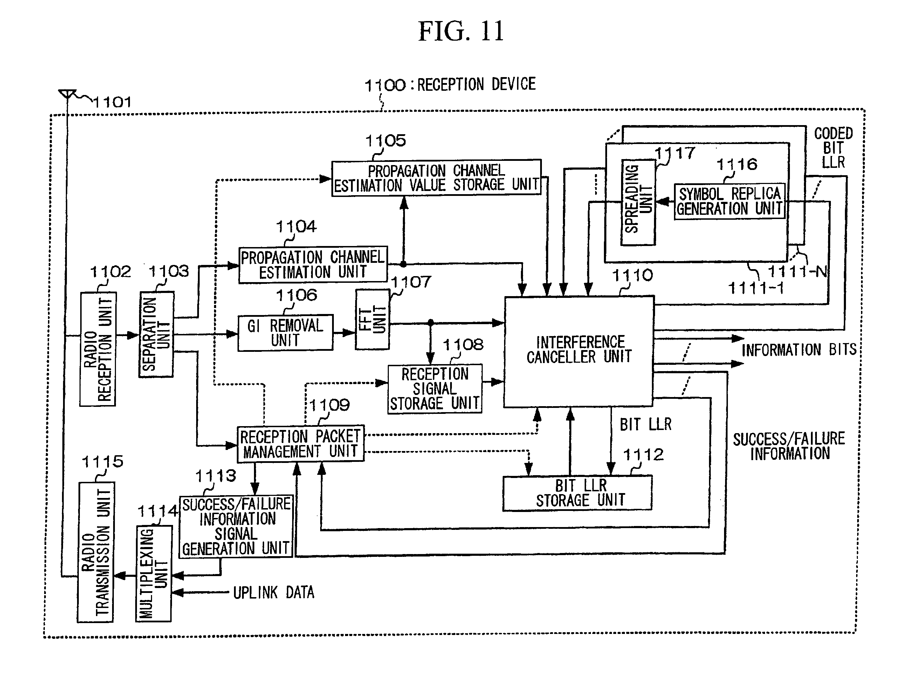

FIG. 11 is a schematic block diagram showing a configuration of the reception device 1100 according to the fourth embodiment of the present invention. The reception device 1100 includes an antenna 1101, a radio reception unit 1102, a separation unit 1103, a propagation channel estimation unit 1104, a propagation channel estimation value storage unit 1105, a GI removal unit 1106, an FFT unit 1107, a reception signal storage unit 1108, a reception packet management unit 1109, an interference canceller unit 1110, code channel replica generation units 1111-1 to 1111-N, a bit LLR storage unit 1112, a success/failure information signal generation unit 1113, a multiplexing unit 1114, and a radio transmission unit 1115. The propagation channel estimation unit 1104 to the bit LLR storage unit 1112 are collectively referred to as a data signal detection unit.

The code channel replica generation units 1111-1 to 1111-N each include a symbol replica generation unit 1116 and a spreading unit 1117.

The respective blocks, excluding the reception packet management unit 1109, shown in FIG. 11 may be realized in the same configuration as those with the same name in FIG. 3.

Hereinafter, the reception packet management unit 1109 and the retransmission control unit 1012 having different functions from those in the second embodiment will be described.

The reception packet management unit 309 (FIG. 3) in the second embodiment outputs various instructions to the interference canceller unit 310, the bit LLR storage unit 312, the reception signal storage unit 308, and the propagation channel estimation value storage unit 305 based on the retransmission control information signal separated by the separation unit 303 and the success/failure information output from the interference canceller unit 310. The reception packet management unit 309 in the second embodiment instructs the success/failure information signal generation unit 313 to generate a success/failure information signal.

On the other hand, the reception packet management unit 1109 (FIG. 11) in the fourth embodiment outputs various instructions to the interference canceller unit 1110, the bit LLR storage unit 1112, the reception signal storage unit 1108, and the propagation channel estimation value storage unit 1105 based on the retransmission control information signal separated by the separation unit 1103 and the success/failure information output from the interference canceller unit 1110. The reception packet management unit 1109 in the fourth embodiment selects a packet for which a NACK is returned from the success/failure information, and instructs the success/failure information signal generation unit 1113 to generate a success/failure information signal based on the selection result.

Preferably, the reception packet management unit 1109 may instruct the success/failure information signal generation unit 1113 to generate an ACK for packets for which the transmission data detection is successful. The reception packet management unit 1109 may instruct the success/failure information signal generation unit 1113 to select some of packets for which the transmission data detection is not successful and generate a NACK for the selected packets.

In this case, some packets may be selected using the following method.

(1) A NACK for a packet including information with high importance (for which small delay is required) is preferentially returned, such that a delay time of a packet with high importance can be shortened. In order to realize this, reception packet management unit 1109 acquires the importance (required delay) of each packet in response to a control signal from the upper layer.

(2) In the case of incremental redundancy (IR), when a coding rate of an initial transmission packet is high, coding rate degradation due to retransmission packet synthesis is great. For this reason, the NACK for the initial transmission packet with a high coding rate is preferentially returned, such that a coding gain due to the retransmission can increase and efficient retransmission can be performed.

(3) Packets for which the NACK is preferentially returned are selected based on the number of retransmissions. For example, the NACK for a packet with a small retransmission number is preferentially returned, such that the average delay time can be shortened. Alternatively, the NACK for a packet with a great retransmission number is preferentially returned, such that the maximum delay time can be shortened.

(4) When reception quality differs from packet to packet, the NACK for a packet of which the reception quality is low (reception power is small) is preferentially returned, such that the overall reception quality can be improved. In order to realize this, the output of the propagation channel estimation unit or the demodulation unit is input to the reception packet management unit 1109, which measures the reception power of each packet.

(5) The NACK for a packet of which the coded bit LLR value that is a decoding result is small is preferentially returned, such that the decoding accuracy of a packet, which has poor decoding accuracy, can be improved. In order to realize this, the coded bit LLR is also input to the reception packet management unit 1109.

The retransmission control unit 212 (FIG. 2) in the second embodiment instructs the coded bit storage unit 218 to output a coded bit sequence corresponding to the packet for which the NACK is returned. The retransmission control unit 212 instructs selection of some packets rather than all packets for which the NACK is returned and performance of retransmission.

On the other hand, the retransmission control unit 1012 in the fourth embodiment instructs the coded bit storage unit 1018 to output a coded bit sequence corresponding to the packet for which the NACK is returned. In this case, the retransmission control unit 1012 may instruct to retransmit all packets for which the NACK is returned, or may instruct selection of some of the packets and performance of retransmission, as in the second embodiment.

Thus, in the radio communication system of the present embodiment, a plurality of initial transmission packets are multiplexed and transmitted from the transmission device 1000 to the reception device 1100, which detects the data while removing the interference (the other multiplexed packet). When the reception device has failed in the data detection, the retransmission packet is transmitted from the transmission device 1000 to the reception device 1100. When the reception device has failed in the detection of the plurality of multiplexed initial transmission packets, the reception device reports information indicating detection failure corresponding to some of the packets. The reception device re-detects not only some packets but also the other initial transmission packets for which the reception device has failed in the initial detection. When the detection is successful, the reception device transmits information indicating the detection success to the transmission device. Thus, it is possible to suppress the number of downlink retransmission packets, thereby improving throughput.

[Fifth embodiment]

In the second embodiment, the reception side performs the process described in the first embodiment using the repetitive parallel MCI canceller, as described above. In a fifth embodiment, a case where a reception side performs the process described in the first embodiment using a repetitive successive MCI canceller will be described. Since a transmission device may be the transmission device 200 shown in FIG. 2, a description thereof will be omitted.

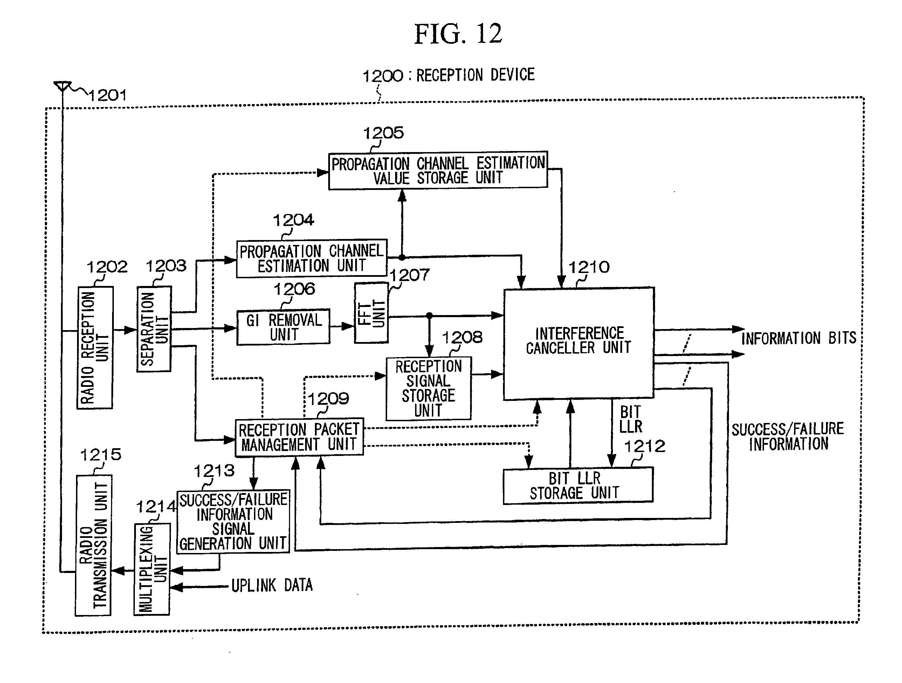

FIG. 12 is a schematic block diagram showing a configuration of a reception device 1200 according to the fifth embodiment of the present invention. The reception device 1200 includes an antenna 1201, a radio reception unit 1202, a separation unit 1203, a propagation channel estimation unit 1204, a propagation channel estimation value storage unit 1205, a GI removal unit 1206, an FFT unit 1207, a reception signal storage unit 1208, a reception packet management unit 1209, an interference canceller unit 1210, a bit LLR storage unit 1212, a success/failure information signal generation unit 1213, a multiplexing unit 1214, and a radio transmission unit 1215.
Since the blocks other than the interference canceller unit 1210 may be the same as those with the same names shown in FIG. 3, a process performed by the interference canceller unit 1210 will be described hereinafter.

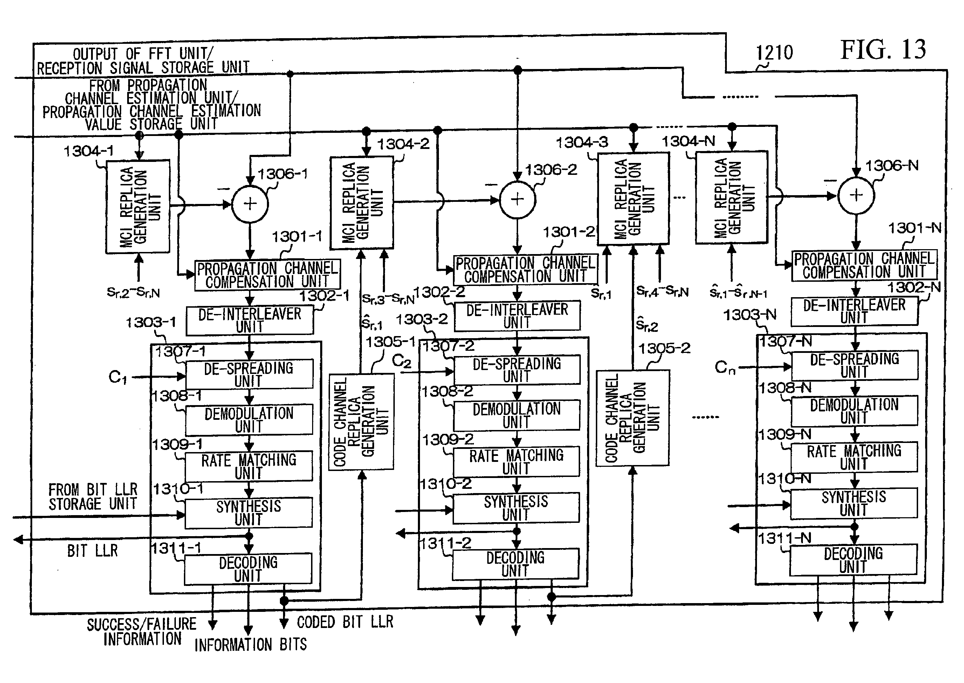

FIG. 13 is a schematic block diagram showing a configuration of the interference canceller unit 1210 of the reception device 1200 according to the fifth embodiment of the present invention. A case where signals of code channels corresponding to spreading codes $C_1$ to $C_N$ are sequentially detected in an order of $C_1$, $C_2$, $C_3$ to $C_N$ will be described herein. A series of processes in the interference canceller unit 1210 are repeatedly executed. The number of repetitions is at least one.

The interference canceller unit 1210 includes propagation channel compensation units 1301-1 to 1301-N, de-interleaver units 1302-1 to 1302-N, code separation units 1303-1 to 1303-N, MCI replica generation units 1304-1 to 1304-N, code channel replica generation units 1305-1, 1305-2 to 1305-N (not shown), and subtraction units 1306-1, 1306-2 to 1306-N.

The code separation unit 1303-1 includes a de-spreading unit 1307-1, a demodulation unit 1308-1, a rate matching unit 1309-1, a synthesis unit 1310-1, and a decoding unit 1311-1. The code separation units 1303-2 to 1303-N include de-spreading units 1307-2 to 1307-N, demodulation units 1308-2 to 1308-N, rate matching units 1309-2 to 1309-N, synthesis units 1310-2 to 1310-N, and decoding units 1311-2 to 1311-N, like the code separation unit 1303-2 to 1303-N.
While the plurality of blocks with the same functions are repeatedly described for convenience of the description, only one block may be included and the function of that block may be used several times.
The blocks in the interference canceller unit 1210 perform the same processes as those with the same names in the interference canceller unit 310 shown in FIG. 3. The code channel replica generation units 1305-1 to 1305-N perform the same process as the code channel replica generation unit 311 in the reception device 300. Accordingly, a difference between the process of the interference canceller unit 1210 and the process of the interference canceller unit 310 will be described herein.

In the second embodiment, the interference canceller unit 310 detects the signals of the code channels corresponding to $C_1$ to $C_N$, and the code channel replica generation unit 311 generates the code channel replicas corresponding to $C_1$ to $C_N$. The generated code channel replicas are used for interference cancellation in the next repetition in the interference canceller unit 310. On the other hand, in the present embodiment, the interference canceller unit 1210 includes a code channel replica generation unit 1305. Whenever the detection of signals of any code channels corresponding to $C_1$ to $C_N$ is terminated, the code channel replica generation unit 1305 of the interference canceller unit 1210 generates or updates a code channel replica. The interference canceller unit 1210 uses the generated or updated code channel replica to remove interference in a code channel to be detected next time. That is, in the second embodiment, the code channel replica is updated after the signal detection for all the code channels of $C_1$ to $C_N$. On the other hand, in the present embodiment, the code channel replica is updated after the signal detection for one code channel. Accordingly, it is possible to generate a high-precision code channel replica.

The reception device 1200 may perform the same HARQ process as in the second embodiment even in a system that performs such an interference cancellation process.
While the process of the first embodiment is performed in the present embodiment as described above, the process of the second embodiment may be performed, as in the fourth embodiment.

Thus, in the radio communication system of the present embodiment, a plurality of initial transmission packets are multiplexed and transmitted from the transmission device to the reception device 1200. The reception device 1200 detects the data while removing the interference (the other multiplexed packet). When the reception device has failed in the data detection, the retransmission packet is transmitted from the transmission device to the reception device 1200. When the reception device has failed to detect the plurality of multiplexed initial transmission packets, the transmission device transmits retransmission packets corresponding to some of the packets for which the data detection has failed, to the reception device. The reception device re-detects not only some packets but also the other initial transmission packets for which the reception device has failed in the initial detection. When the detection is successful, the reception device transmits information indicating the detection success to the transmission device, which is a base station. Thus, it is possible to suppress the number of downlink retransmission packets, thereby improving throughput.

[Sixth Embodiment]

In the second and fourth embodiments, the packets are multiplexed by the spreading codes and the MCI interference is removed by the canceller, as described above. In the present embodiment, a case where the process described in the first embodiment is performed when packets are spatially multiplexed using MIMO (multiple input multiple output) and the other stream signal is removed by an interference canceller will be described. In addition, a repetitive SIC (successive interference canceller) is used as the interference canceller.

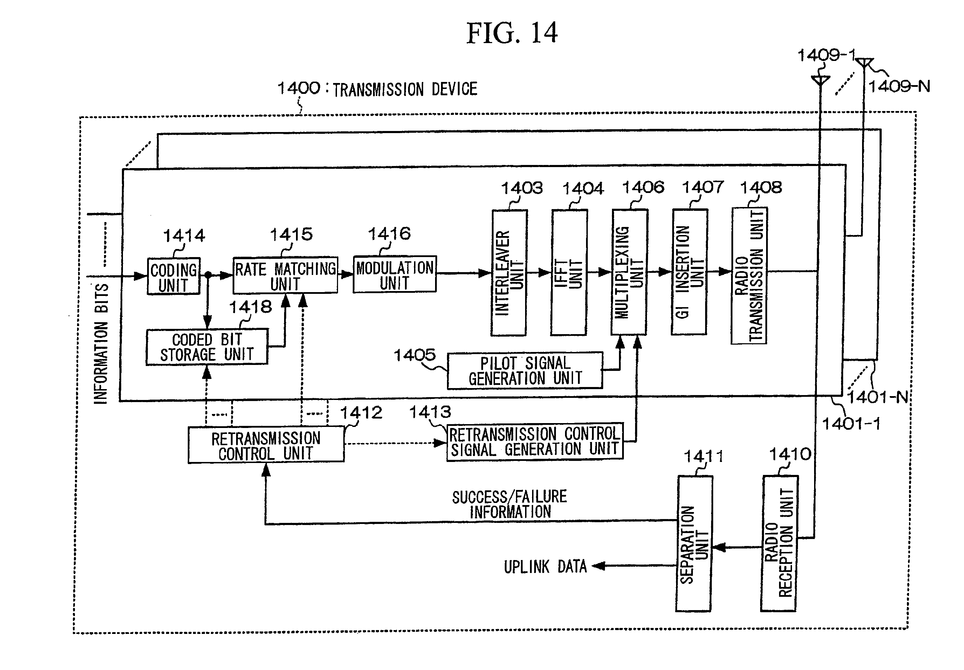

FIG. 14 is a schematic block diagram showing a configuration of a transmission device 1400 according to the sixth embodiment of the present invention. The transmission device 1400 includes stream signal generation units 1401-1 to 1401-N (where N is the number of streams), antennas 1409-1 to 1409-N, a radio reception unit 1410, a separation unit 1411, a retransmission control unit 1412, and a retransmission control signal generation unit 1413.

The stream signal generating units 1401-1 to 1401-N each include a coding unit 1414, a rate matching unit 1415, a modulation unit 1416, an interleaver unit 1403, an IFFT unit 1404, a pilot signal generation unit 1405, a multiplexing unit 1406, a GI insertion unit 1407, a radio transmission unit 1408, and a coded bit storage unit 1418.

The stream signal generating units 1401-1 to 1401-N generate transmission data signals of respective streams from the information bits. First, the coding unit 1414 performs a channel coding process on an information bit sequence and outputs a coded bit sequence to the rate matching unit 1415 and the coded bit storage unit 1418. Here, it is preferable that coding with an error correction capability, such as convolution coding or Reed-Solomon coding, is used as channel coding. More preferably, coding with an excellent error correction capability, such as turbo coding or LDPC coding, is used.

The rate matching unit 1415 performs a puncturing (bit removal) process, a bit padding (bit insertion) process, or a bit repetition process on the coded bits output from the coding unit 1414 or the coded bit storage unit 1418 according to a retransmission number output from the retransmission control unit 1412. The rate matching unit 1415 may also perform a bit interleaving process. An example of the puncturing will be described below as an example of the rate matching.

The coded bit storage unit 1418 stores the coded bit sequence output from the coding unit 1414. Moreover, the coded bit storage unit 1418 erases the stored coded bit sequence under control of the retransmission control unit 1412. The modulation unit 1416 performs a modulation process on the coded bit (punctured coded bit) sequence output from the rate matching unit 1415 and outputs a modulated symbol sequence to the interleaver unit 1403. In this case, the modulation unit 1416 may use a modulation scheme such as PSK or QAM. More preferably, the modulation unit 1416 may use a modulation scheme according to the propagation channel between the transmission device 1400 and a reception device 1500.

The interleaver unit 1403 performs an interleaving process, such as symbol interleaving (frequency interleaving), on the signal output from the modulation unit 1416 and outputs a resultant signal to the IFFT unit 1404.

The IFFT unit 1404 performs an IFFT process on a signal arranged in a frequency direction to convert the signal into a signal in a time domain, and outputs the signal in a time domain to the multiplexing unit 1406.

The pilot signal generation unit 1405 generates a pilot signal used for propagation channel estimation in the reception device and outputs the pilot signal to the multiplexing unit 1406. Preferably, the pilot signal generation unit 1405 generates a pilot signal orthogonal to each stream.

The retransmission control signal generation unit 1413 generates a signal (retransmission control signal) for notifying the reception device of the number of retransmissions of each stream data signal reported from the retransmission control unit 1412, and outputs the retransmission control signal to the multiplexing unit 1406. Although the retransmission control signal is multiplexed in the stream of the stream signal generating unit 1401-1, the present invention is not limited thereto. The retransmission control signal may be multiplexed in any stream (e.g., plural streams).

The multiplexing unit 1406 multiplexes the data signal output from the IFFT unit 1404, the pilot signal output from the pilot signal generation unit 1405, and the retransmission control signal output from the retransmission control signal generation unit 1413, and outputs a resultant signal to the GI insertion unit 1407.

The GI insertion unit 1407 adds a guard interval to the signal output from the multiplexing unit 1406, and the radio transmission unit 1408 transmits a resultant signal to the reception device 300 via the antenna 1409-1. The other stream signal generation units 1401-2 to 1401-N and antennas 1409-2 to 1409-N perform the same process as the stream signal generation unit 1401-1 and the antenna 1409-1.

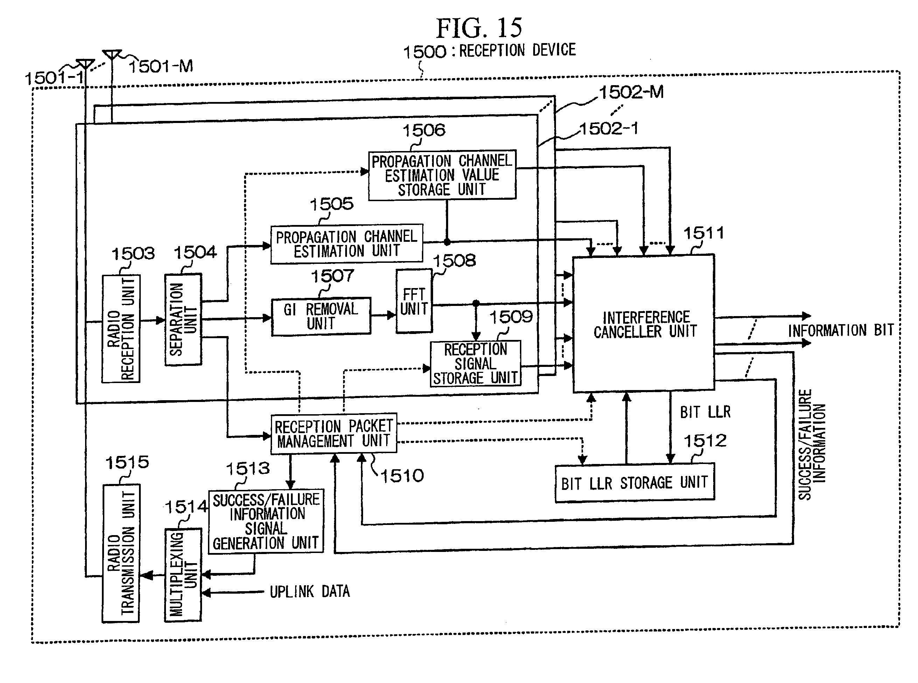

FIG. 15 is a schematic block diagram showing a configuration of the reception device 1500 according to the sixth embodiment of the present invention. The reception device 1500 includes antennas 1501-1 to 1501-M (where M is the number of reception antennas), a radio reception unit 1503, a separation unit 1504, a propagation channel estimation unit 1505, a propagation channel estimation value storage unit 1506, a GI removal unit 1507, an FFT unit 1508, a reception signal storage unit 1509, a reception packet management unit 1510, an interference canceller unit 1511, a bit LLR storage unit 1512, a success/failure information signal generation unit 1513, a multiplexing unit 1514, and a radio transmission unit 1515. The propagation channel estimation unit 1504 to the bit LLR storage unit 1512 are collectively referred to as a data signal detection unit.

Signals received via the antennas 1501-1 to 1501-M are subjected to a reception process by the reception processing units 1502-1 to 1502-M for each antennas. First, the signal received by the radio reception unit 1503 (also referred to as a reception unit) is separated into the pilot signal, the retransmission control information signal, and the data signal by the separation unit 1504.

The propagation channel estimation unit 1505 estimates a characteristic of a propagation channel between each of the antennas 1409-1 to 1409-N of the transmission device 1400 and the antenna 1501 of the reception device 1500 using the pilot signal separated by the separation unit 1504, and outputs a propagation channel estimation value to the propagation channel estimation value storage unit 1506 and the interference canceller unit 1511.

The propagation channel estimation value storage unit 1506 stores the propagation channel estimation value output from the propagation channel estimation unit 1505.

The GI removal unit 1507 removes the guard interval from the data signal separated by the separation unit 1504 and outputs a resultant signal to the FFT unit 1508.

The FFT unit 1508 performs an FFT process on the output signal of the GI removal unit 1507 to convert the output signal into a signal in a frequency domain, and outputs the signal in a frequency domain to the reception signal storage unit 1509 and the interference canceller unit 1511.

The reception signal storage unit 1509 stores the signal in a frequency domain output from the FFT unit 1509.

The reception packet management unit 1510 outputs various instructions to the interference canceller unit 1511, the bit LLR storage unit 1512, the reception signal storage unit 1509, and the propagation channel estimation value storage unit 1506 based on the retransmission control information signal separated by the separation unit 1504 and the success/failure information output from the interference canceller unit 1511. The reception packet management unit 1510 instructs the success/failure information signal generation unit 1513 to generate a success/failure information signal. The operation of the reception packet management unit 1510 will be described in detail below.

The interference canceller unit 1511 detects the information bit sequence from the signals output from the reception processing units 1502-1 to 1502-M for each antennas while referring to the propagation channel estimation value output from the propagation channel estimation unit 1504, based on the instruction of the reception packet management unit 1510, and outputs the success/failure information.

When the bit LLR is output from the bit LLR storage unit 1512, the interference canceller unit 1511 detects the information bits from the reception signal output from the reception signal storage unit 1509 using the bit LLR and the propagation channel estimation value output from the propagation channel estimation value storage unit 1506. A concrete example of the operation of the interference canceller unit 1511 will be described below.

The bit LLR storage unit 1512 stores the bit LLR output from the interference canceller unit 1511 based on the instruction of the reception packet management unit 1510. When the retransmission packet is multiplexed in the reception signal, the bit LLR storage unit 1512 outputs the stored bit LLR to the interference canceller unit 1511, and stores the bit LLR output from the interference canceller unit 1511 again. That is, the bit LLR storage unit 1512 replaces the stored bit LLR with the newly output bit LLR.

Based on the instruction of the reception packet management unit 1510, the success/failure information signal generation unit 1513 generates the success/failure information signal and outputs the success/failure information signal to the multiplexing unit 1514.

The multiplexing unit 1514 multiplexes the success/failure information signal output from the success/failure information signal generation unit 1513 with the uplink data signal, and outputs a resultant signal to the radio transmission unit 1515.

The radio transmission unit 1515 (also referred to as a report transmission unit) transmits the signal to the transmission device 1400 via the antenna 1501.

Although the uplink signal is transmitted only from the antenna 1501-1 as described above, the present invention is not limited thereto and the uplink signal may be transmitted using a plurality of antennas.

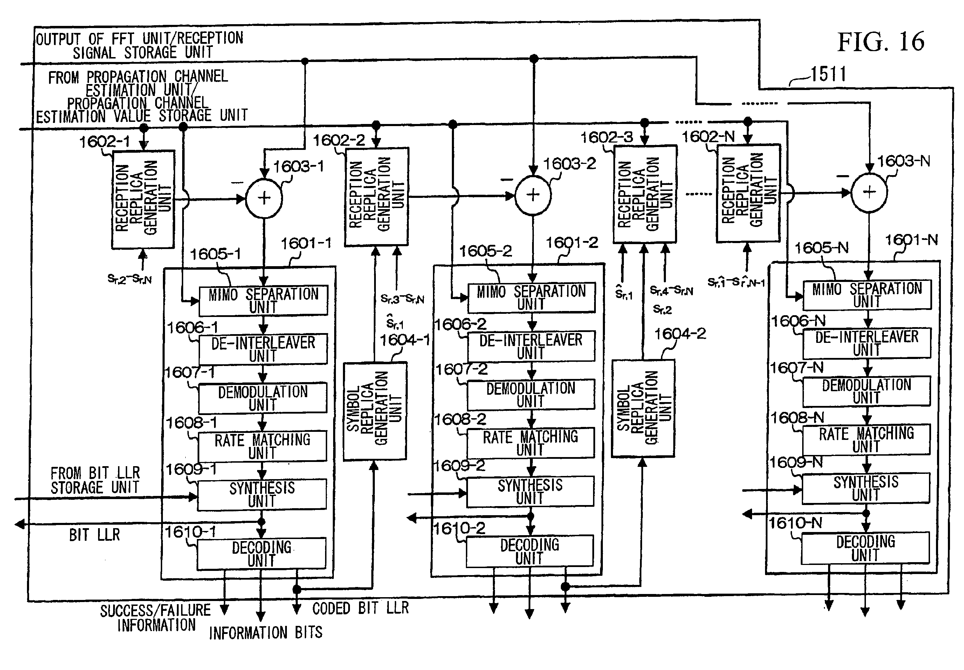

FIG. 16 is a schematic block diagram showing a configuration of the interference canceller unit 1511 of the reception device 1500 according to the sixth embodiment of the present invention. A case where first to N-th streams are sequentially detected will be described herein. A series of processes in the interference canceller unit 1511 are repeatedly executed except for a case where all information bits could be detected with no error in the first detection.

The interference canceller unit 1511 includes stream detection units 1601-1, 1601-2 to 1601-N, reception replica generation units 1602-1, 1602-2, 1602-3 to 1602-N, subtraction units 1603-1, 1603-2 to 1603-N, and symbol replica generation units 1604-1, 1604-2 to 1604-N (not shown).

The stream detection unit 1601-1 includes a MIMO separation unit 1605-1 (also referred to as a stream separation unit), a de-interleaver unit 1606-1, a demodulation unit 1607-1, a rate matching unit 1608-1, a synthesis unit 1609-1, and a decoding unit 1610-1. The stream detection units 1601-2 to 1601-N include MIMO separation units 1605-2 to 1605-N, de-interleaver units 1606-2 to 1606-N, demodulation units 1607-2 to 1607-N, rate matching units 1608-2 to 1608-N, synthesis units 1609-2 to 1609-N, and decoding units 1610-2 to 1610-N, like the stream detection unit 1601-2.

The reception replica generation units 1602-1 to 1602-N (also referred to as interference signal replica generation units) generate stream replicas (interference replicas) based on the symbol replicas excluding $S_{r,k}$ among the symbol channel replicas $S_{r,1}$ to $S_{r,N}$ output from the symbol replica generation units 1604-1 to 1604-N and the propagation channel estimation value output from the propagation channel estimation unit 1505 (or the propagation channel estimation value storage unit 1506), and output the stream replicas to the subtraction units 1603-1 to 1603-N.

In the first detection, it is unnecessary for the reception replica generation units 1602-1 to 1602-N to generate the reception replicas. Each symbol replica during repetition is a finally generated or updated symbol replica.

The subtraction units 1603-1 to 1603-N subtract the stream replicas from the output of the FFT unit 1508 (or the reception signal storage unit 1509).

The MIMO separation units 1605-1 to 1605-N perform MIMO stream separation on the output of the subtraction units 1603-1 to 1603-N based on the propagation channel estimation value output from the propagation channel estimation unit 1505 (or the propagation channel estimation storage unit 1506), and output a resultant signal to the de-interleaver units 1601-1 to 1601-N. Specifically, the MIMO separation units 1605-1 to 1605-N reproduce the stream data signals through maximum likelihood estimation. Alternatively, the MIMO separation units 1605-1 to 1605-N use a separation process such as a process of calculating MMSE weights for the outputs of the subtraction units 1603-1 to 1603-N and multiplying the outputs of the subtraction units 1603-1 to 1603-N by the calculated weights.

The de-interleaver units 1606-1 to 1606-N perform a de-interleaving process on the outputs of the MIMO separation units 1605-1 to 1605-N. It is preferable that the de-interleaving process is a process of rearranging an order rearranged through the interleaving process in the interleaver unit 1403 into an original order.

The demodulation units 1607-1 to 1607-N demodulate modulated symbol sequences that are output signals of the de-interleaver units 1606-1 to 1606-N to extract a signal of each bit and output the signals to the rate matching units 1608-1 to 1608-N. Preferably, the demodulation units 1607-1 to 1607-N output the LLR of each bit. The MIMO separation unit, the de-interleaver unit, the demodulation unit, and the rate matching unit are collectively referred to as a demodulation unit.

The rate matching units 1608-1 to 1608-N perform inverse processes of the puncturing (bit removal) process, the bit padding (bit insertion) process, or the bit repetition process performed in the rate matching unit 1415 of the transmission device 1400. That is, the rate matching units 1608-1 to 1608-N perform a bit de-puncturing (bit LLR insertion) process on the punctured bits, perform a bit removal process on the bits subjected to the bit padding (bit insertion) process, and perform bit LLR synthesis on the bits subjected to the bit repetition.

When the packet is an initial transmission packet or the first retransmission packet, the synthesis units 1609-1 to 1609-N output the bit LLRs output from the rate matching units 1608-1 to 1608-N as they are. On the other hand, when the packet is the second retransmission packet or a subsequent retransmission packet, the synthesis units 1609-1 to 1609-N synthesize the bit LLR (the bit LLR in the corresponding initial transmission packet) stored in the bit LLR storage unit 1412 and the bit LLRs output from the rate matching units 1608-1 to 1608-N, and output resultant bit LLRs. The bit LLRs output from the synthesis units 1609-1 to 1609-N are input to the decoding units 1610-1 to 1610-N. When the packet is the retransmission packet, the output bit LLRs are sent to the bit LLR storage unit 1412.

The MIMO separation unit, the de-interleaver unit, the demodulation unit, the rate matching unit, and the synthesis unit are collectively referred to as a signal synthesis unit.

Next, a process of transmitting the uplink signal from the reception device 1500 to the transmission device 1400 will be described with reference to FIG. 14.

A signal transmitted from the reception device 1500 is received by the radio reception unit 1410 (also referred to as a report reception unit) via the antennas 1409-1 to 1409-N. While the configuration in which the signal is received only via the antenna 1409-1 is described, the present invention is not limited thereto. The signal may be received via any antenna (e.g., a plurality of antennas).

The separation unit 1411 separates the reception signal into the uplink data and the success/failure information. The retransmission control unit 1412 prepares to transmit the retransmission packet (retransmission data signal) based on the success/failure information separated from the uplink data by the separation unit 1411. When the success/failure information is information indicating reception failure (NACK), the retransmission control unit 1412 instructs the coded bit storage unit 1418 to output the coded bit sequence corresponding to the packet for which the NACK is returned. In this case, some packets may be selected using the following method.

(1) Transmission data included in the respective packets is sequentially transmitted from an upper layer. Retransmission is performed in a transmission order in the upper layer, thereby shortening the average delay time.
(2) A packet including information with high importance (for which small delay is required) is preferentially retransmitted, such that a delay time of a packet with high importance can be shortened.

(3) In the case of incremental redundancy (IR), when a coding rate of an initial transmission packet is high, coding rate degradation due to retransmission packet synthesis is great. For this reason, the initial transmission packet with a high coding rate is preferentially retransmitted such that a coding gain due to the retransmission can increase and efficient retransmission can be performed.

(4) Packets to be preferentially retransmitted are selected based on the number of retransmissions. For example, a packet with a small retransmission number is preferentially retransmitted such that the average delay time can be shortened. Alternatively, a packet with a great retransmission number is preferentially retransmitted such that the maximum delay time can be shortened.

(5) When reception quality differs from packet to packet, a packet of which the reception quality is low (reception power is small) is preferentially retransmitted such that the overall reception quality can be improved.

The retransmission control unit 1412 instructs the rate matching unit 1415 to perform a rate matching process on the coded bit sequence output from the coded bit storage unit 1418. The rate matching process may be the same process performed in the initial transmission, but it is preferable that the rate matching process is changed according to the number of retransmissions. Moreover, the retransmission control unit 1412 notifies the retransmission control signal generation unit 1413 of information indicating the number of retransmissions of multiplexed packets. The retransmission control signal generation unit 1413 generates a signal (retransmission control signal) indicating the information and outputs the retransmission control signal to the multiplexing unit 1406.

While it is preferable that the information indicating the number of retransmissions of the multiplexed packets is information indicating the number itself, it may be information obtained by processing the retransmission number, such as simple information indicating whether a transmission is the initial transmission or the retransmission. When the success/failure information is information indicating reception success (ACK), the retransmission control unit 1412 instructs the coded bit storage unit 1418 to release a memory area where a coded bit sequence corresponding to a packet for which the ACK is returned is stored.

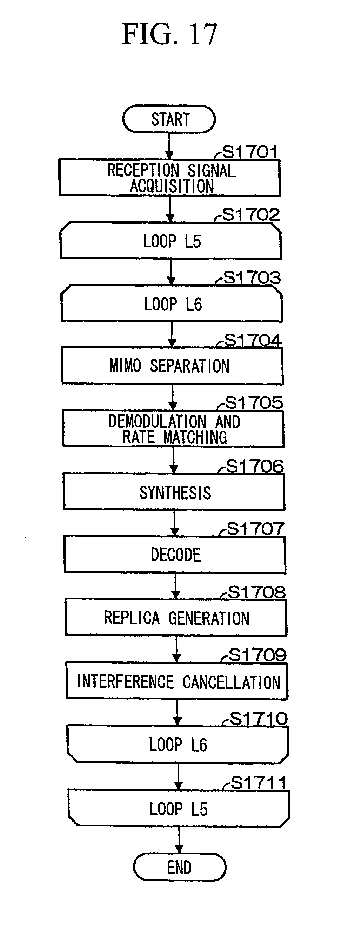

FIG. 17 is a flowchart showing the process in the reception device 1500 according to the sixth embodiment of the present invention. In FIG. 17, an example of a process of extracting information bits from an initial transmission packet included in a previous reception signal, which includes the initial transmission packet corresponding to the retransmission packet, and the control performed by the reception packet management unit 1510 is shown.

First, the previous reception signal including the initial transmission packet corresponding to the retransmission packet is acquired from the reception signal storage unit 1409 (step S1701). Next, steps S1702 to S1711 in a loop (loop L5) for the initial transmission packet corresponding to the retransmission packet are executed. In a repetitive process, detection of the transmission data and removal of interferences in a data signal including subsequent transmission data are repetitively performed (steps S1703 to S1710 in a loop (loop L6)). The initial transmission packet is first subjected to MIMO stream separation in the MIMO separation unit 1704 using the propagation channel estimation value upon receiving the reception signal, which is stored in the propagation channel estimation value storage unit 1406 (step S1704). The MIMO-separated signal is processed by the de-interleaver unit 1606 and then subjected to a demodulation process and a rate matching process in the demodulation unit 1607 and the rate matching unit 1608 to obtain the coded bit LLR (step S1705).

Next, the coded bit LLR obtained in step S1705 and the coded bit LLR of the retransmission packet corresponding to the initial transmission packet are synthesized by the synthesis unit 1609 (step S1706). Using the coded bit LLR obtained through the synthesis, the decoding unit 1610 performs decoding (step S1706). Using the coded bit LLR output from the decoding unit 1610, the stream replica is generated through the processes in the symbol replica generation unit 1604 and the reception replica generation unit 1602 (step S 1708). Interference is then removed through subtraction in the subtraction unit 1603 (step S1709).

It is preferable that the replica of the retransmission packet included in the previous reception signal is also canceled in the stream replica cancellation in step S 1709.

The reception device 1500 that performs the MIMO communication may perform the same HARQ process as in the fourth embodiment even in a system that performs such an inter-stream interference cancellation process.

While the process of the first embodiment is performed in the present embodiment as described above, the process of the second embodiment may be performed, as in the fourth embodiment.

Thus, in the radio communication system of the present embodiment, a plurality of initial transmission packets are multiplexed and transmitted from the transmission device to the reception device, which detects the data while removing the interference (the other multiplexed packet). When the reception device has failed in the data detection, the retransmission packet is transmitted from the transmission device to the reception device. When the reception device has failed in the detection of the plurality of multiplexed initial transmission packets, the transmission device transmits retransmission packets corresponding to some of the packets for which the reception device has failed in the detection, to the reception device. The reception device re-detects not only some packets but also the other initial transmission packets for which the reception device has failed in the initial detection. When the detection is successful, the reception device transmits the information indicating the detection success to the transmission device.

Thus, it is possible to suppress the number of downlink retransmission packets, thereby improving throughput.

While in the above-described embodiments, the bit LLR output from the demodulation unit is synthesized in the synthesis unit as described above, the modulated symbol sequence before demodulation may be synthesized only in a case where the transmission device performs the same rate matching process both on the initial transmission packet and the retransmission packet. In this case, the modulated symbol sequence may be stored instead of storing the demodulated bit LLR.

Although in the above-described embodiments, the coded bit LLR output from the decoding unit is used to generate the data signal replica irrespective of whether the transmission data detection is successful, as described above, the present invention is not limited thereto. Preferably, the replica of the data signal for which the transmission data detection is successful is generated using the information bits output from the decoding unit. Accordingly, it is possible to improve the accuracy of the replica generation.

While in the above-described embodiments, the retransmission packet is synthesized, the transmission data included in the initial transmission packets is re-detected, and the ACK is reported to the transmission device when the transmission data re-detection is successful and no report is performed when the transmission data re-detection is not successful, as described above, the present invention is not limited thereto. For example, when the transmission data re-detection is successful, the ACK may be reported to the transmission device and when the transmission data re-detection is not successful, the NACK may be reported to the transmission device.

While in the above-described embodiments, HARQ is used as described above, the present embodiment may be applied to ARQ (i.e., a case where the initial transmission packet and the retransmission packet are not synthesized). The symbol replica may be generated using the result of decoding (or the result of demodulating) the retransmission packet instead of synthesizing the initial transmission packet and the retransmission packet, and the interference signal replica may be generated using the symbol replica and the propagation channel estimation result in the initial transmission. In this case, when the propagation channel characteristic in the retransmission packet transmission is more excellent than that in the initial transmission packet transmission or when the transmission data detection accuracy for the retransmission packet is higher than that for the initial transmission packet, for example, when the retransmission packet is transmitted at a lower transmission rate, the effects are achieved.

In the above-described embodiments, a program of realizing the functions of the respective components of the transmission device and the reception device may be recorded on a computer-readable recording medium, and may be read and executed by the computer system to control the transmission device or the reception device. The "computer system" mentioned herein includes an operating system (OS) or hardware such as peripheral devices.

The "computer-readable recording medium" includes a storage device, including a portable medium such as a flexible disk, a magnetic optical disk, a ROM, and a CD-ROM, and a hard disk embedded in the computer system. Further, the "computer-readable recording medium" may include a medium for temporarily and dynamically storing programs, like a communication line when a program is transmitted via a network such as the Internet or a communication line such as a telephone line, and a medium for storing programs for a predetermined time, like a volatile memory inside a computer system consisting of a server and a client in that case. The program may be a program for realizing some of the above-described functions. Alternatively, the program may be a program capable of realizing the above-described functions through a combination with a program previously stored in a computer system.

Although the embodiments of the present invention have been described with reference to the drawings, a specific configuration is not limited to the embodiments and the appended claims are intended to cover modifications without departing from the scope of the invention.

Industrial applicability

The present invention is applicable to a transmission device, a reception device, a communication system, and a communication method capable of reducing the number of downlink retransmission packets from the transmission device to the reception device to improve throughput.

**Claims**

**1.** A transmission device which communicates with a reception device, the transmission device comprising:

      a transmission signal generation unit which generates a signal in which a plurality of data signals are multiplexed, from a plurality of transmission data;
      a transmission unit which transmits the signal generated by the transmission signal generation unit to the reception device; and

a report reception unit which receives success/failure information indicating success/failure of transmission data detection for each data signal, the success/failure information being reported from the reception device, wherein the transmission signal generation unit further selects some of the data signals for which the success/failure information indicates transmission data detection failure, and generates retransmission signals for the selected data signals, and

the transmission unit further transmits the retransmission signal to the reception device.

2. The transmission device according to claim 1, wherein the transmission signal generation unit acquires a priority of the transmission data included in each data signal and selects some data signals based on the acquired priority.

3. The transmission device according to claim 1, wherein the transmission signal generation unit stores the number of retransmissions of the transmission data included in each data signal and selects some data signals based on the retransmission number.

4. The transmission device according to claim 1, wherein the transmission signal generation unit stores a coding rate of each data signal and selects some data signals based on the coding rate.

5. The transmission device according to claim 1, comprising a transmission data storage unit which stores the plurality of transmission data,

wherein the transmission signal generation unit generates the retransmission signal from the transmission data stored in the transmission data storage unit.

6. The transmission device according to claim 5, wherein the report reception unit further receives success/failure information indicating success/failure of transmission data re-detection, the success/failure information being reported from the reception device.

7. The transmission device according to claim 6, wherein the transmission data storage unit deletes transmission data for which the success/failure information indicating success/failure of transmission data re-detection is reported.

8. The transmission device according to claim 1, wherein the transmission signal generation unit comprises a spreading unit which code-spreads the plurality of data signals.

9. The transmission device according to claim 1, wherein the transmission unit spatially multiplexes and transmits the plurality of data signals.

10. A reception device which communicates with a transmission device, the reception device comprising:

a reception unit which receives a signal in which a plurality of data signals are multiplexed, from the transmission device;

a data signal detection unit which detects transmission data included in the plurality of data signals from the reception signal received by the reception unit, and outputs the detected transmission data and success/failure of transmission data detection for each data signal;

a success/failure information signal generation unit which generates one success/failure information for the plurality of multiplexed data signals; and

a report transmission unit which reports the success/failure information to the transmission device.

11. A reception device which communicates with a transmission device, the reception device comprising:

a reception unit which receives a signal in which a plurality of data signals are multiplexed, from the transmission device;

a data signal detection unit which detects transmission data included in the plurality of data signals from the reception signal received by the reception unit, and outputs the detected transmission data and success/failure of transmission data detection for each data signal;

a selection unit which selects some of data signals for which the transmission data detection is not successful among the plurality of multiplexed data signals;

a success/failure information signal generation unit which generates success/failure information in data signals for which the transmission data detection is successful and the selected data signals; and

a report transmission unit which reports the success/failure information to the transmission device.

12. The reception device according to claim 11, wherein the selection unit acquires a priority of the transmission data included in each data signal and selects some data signals based on the acquired priority.

13. The reception device according to claim 11, wherein the selection unit acquires the number of retransmissions of the transmission data included in each data signal and selects some data signals based on the retransmission number.

14. The reception device according to claim 11, wherein the selection unit acquires a coding rate of each data signal and selects some data signals based on the coding rate.

15. The reception device according to claim 11, wherein the selection unit acquires reception quality of each data signal and selects some data signals based on the reception quality.

16. The reception device according to claim 11, wherein the reception unit further receives a retransmission data signal corresponding to any of the plurality of multiplexed data signals, and
the data signal detection unit re-detects the transmission data included in the data signal corresponding to the retransmission data signal among the plurality of multiplexed data signals and a data signal not corresponding to the at least one retransmission data signal, from the reception signal and the retransmission data signal.

17. The reception device according to claim 16, wherein the data signal detection unit comprises:

   a data signal replica generation unit which generates a data signal replica which is a replica of each data signal;
   an interference signal replica generation unit which generates an interference signal replica from the data signal replica;
   an interference removal unit which subtracts the interference signal replica from the reception signal;
   a signal synthesis unit which synthesizes the reception signals from which the interference signal replica is removed; and
   a determination unit which performs re-detection of the transmission data included in the plurality of multiplexed data signals from the output of the signal synthesis unit.

18. The reception device according to claim 17, wherein the signal synthesis unit comprises:

   a demodulation unit which demodulates the reception signal from which the interference signal replica is removed and demodulates the retransmission signal; and
   a synthesis unit which synthesizes the result of demodulating the reception signal from which the interference signal replica is removed and the result of demodulating the retransmission signal.

19. The reception device according to claim 18, wherein the demodulation unit outputs likelihood information of the transmission data included in the reception signal from which the interference signal replica is removed and the retransmission signal.

20. The reception device according to claim 19, wherein the demodulation unit outputs log likelihood ratios of the transmission data included in the reception signal from which the interference signal replica is removed and outputs the retransmission signal, and
the synthesis unit synthesizes the results by adding the log likelihood ratio of the transmission data included in the reception signal from which the interference signal replica is removed, to the log likelihood ratio of the transmission data included in the retransmission signal.

21. The reception device according to claim 18, wherein the interference signal replica generation unit generates an interference signal replica for each of the detected data signals.

22. The reception device according to claim 18, wherein the interference signal replica generation unit generates interference signal replicas for the data signals excluding an initially detected data signal among the plurality of detected data signals.

23. The reception device according to claim 16, wherein the report transmission unit reports, to the transmission device, success/failure information for the data signal for which the transmission data re-detection is successful, based on the success/failure of the transmission data re-detection output from the data signal detection unit.

24. The reception device according to claim 11, wherein the plurality of data signals are code-spread and multiplexed, and the data signal detection unit comprises a de-spreading unit which performs a de-spreading on the reception signal.

25. The reception device according to claim 11, wherein the plurality of data signals are spatially multiplexed streams, and the data signal detection unit comprises a stream separation unit which performs stream separation on the reception signal.

26. A communication system comprising a transmission device and a reception device,
   wherein the transmission device comprises:

   a transmission signal generation unit which generates a signal in which a plurality of data signals are multiplexed;
   a transmission unit which transmits the signal generated by the transmission signal generation unit to the reception device; and
   a report reception unit which receives success/failure information reported from the reception device,
   wherein the transmission signal generation unit further selects some of the data signals for which the success/ failure information indicates detection failure, and generates retransmission signals for the selected data signals, and the transmission unit further transmits the retransmission signals to the reception device, and
   wherein the reception device comprises:

   a reception unit which receives the signal from the transmission device;
   a data signal detection unit which detects the plurality of data signals from the reception signal received by the reception unit and outputs the detected data signals and success/failure of signal detection; and
   a report transmission unit which reports success/failure information indicating the success/failure of the signal detection to the transmission device,
   wherein the reception unit further receives the retransmission data signal corresponding to any of the plurality of multiplexed data signals, and the data signal detection unit re-detects a data signal for which a signal detection result indicates failure among the plurality of multiplexed data signals, from the reception signal and the retransmission data signal.

27. A communication system comprising a transmission device and a reception device,
   wherein the transmission device comprises:

   a transmission signal generation unit which generates a signal in which a plurality of data signals are multiplexed;
   a transmission unit which transmits the signal generated by the transmission signal generation unit to the reception device; and
   a report reception unit which receives success/failure information reported from the reception device,
   wherein the transmission signal generation unit further generates a retransmission signal for the data signal for which the success/failure information indicates detection failure, and the transmission unit further transmits the retransmission signal to the reception device, and
   wherein the reception device comprises:

   a reception unit which receives the signal from the transmission device;
   a data signal detection unit which detects the plurality of data signals from the reception signal received by the reception unit and outputs the detected data signals and success/failure of transmission data detection for each data signal;
   a selection unit which selects some of data signals for which the transmission data detection is not successful among the plurality of multiplexed data signals;
   a success/failure information signal generation unit which generates success/failure information in data signals for which the transmission data detection is successful and the selected data signals; and
   a report transmission unit which reports the success/failure information to the transmission device,
   wherein the reception unit further receives the retransmission data signal corresponding to any of the plurality of multiplexed data signals, and the data signal detection unit re-detects a data signal for which a signal detection result indicates failure among the plurality of multiplexed data signals, from the reception signal and the retransmission data signal.

**28.** A communication method using a transmission device which communicates with a reception device, the communication method comprising:

generating a signal in which a plurality of data signals are multiplexed, from a plurality of transmission data;
transmitting the signal generated through the transmission signal generation to the reception device; and
receiving success/failure information indicating success/failure of transmission data detection for each data signal, the success/failure information being reported from the reception device,
wherein in the transmission signal generation, selecting some of data signals for which the success/failure information indicates transmission data detection failure, and generating retransmission signals for the selected data signals, and
in the transmission, transmitting the retransmission signals to the reception device.

**29.** A communication method using a reception device which communicates with a transmission device, the communication method comprising:

receiving a signal in which a plurality of data signals are multiplexed, from the transmission device;
detecting transmission data included in the plurality of data signals from the reception signal received through the reception, and outputting the detected transmission data and success/failure of transmission data detection for each data signal;
selecting some of data signals for which the transmission data detection is not successful among the plurality of multiplexed data signals;
generating success/failure information in data signals for which the transmission data detection is successful and the selected data signals; and
reporting the success/failure information to the transmission device.

# FIG. 1

## FIG. 2

200 : TRANSMISSION DEVICE

209

INFORMATION BITS

214 CODING UNIT

215 RATE MATCHING UNIT

216 MODULATION UNIT

217 SPREADING UNIT

218 CODING BIT STORAGE UNIT

201-N

201-1

202 CODE MULTIPLEXING UNIT

203 INTERLEAVER UNIT

204 IFFT UNIT

206 MULTIPLEXING UNIT

207 GI INSERTION UNIT

208 RADIO TRANSMISSION UNIT

205 PILOT SIGNAL GENERATION UNIT

212 RETRANSMISSION CONTROL UNIT

213 RETRANSMISSION CONTROL SIGNAL GENERATION UNIT

211 SEPARATION UNIT

210 RADIO RECEPTION UNIT

SUCCESS/FAILURE INFORMATION

UPLINK DATA

EP 2 247 017 A1

FIG. 3

300 : RECEPTION DEVICE

EP 2 247 017 A1

# FIG. 4

310

```
OUTPUT OF FFT UNIT/RECEPTION SIGNAL STORAGE UNIT

FROM PROPAGATION CHANNEL ESTIMATION UNIT/
PROPAGATION CHANNEL ESTIMATION VALUE STORAGE UNIT
```

404 — MCI REPLICA GENERATION UNIT

$S_{r,1} - S_{r,k-1}$
$S_{r,k+1} - S_{r,N}$

405 — $-$ $+$

401 — PROPAGATION CHANNEL COMPENSATION UNIT

402 — DE-INTERLEAVER UNIT

403

$C_k$

406 — DE-SPREADING UNIT

407 — DEMODULATION UNIT

408 — RATE MATCHING UNIT

FROM BIT LLR STORAGE UNIT

409 — SYNTHESIS UNIT

BIT LLR

410 — DECODING UNIT

SUCCESS/FAILURE INFORMATION

INFORMATION BITS

CODED BIT LLR

# FIG. 5

404

| S$_{r,1}$ | | | |
|---|---|---|---|
| ⋮ | 501 | 502 | 503 |
| S$_{r,k-1}$ | CODE MULTIPLEXING UNIT | INTERLEAVER UNIT | TRANSFER FUNCTION MULTIPLYING UNIT |
| S$_{r,k+1}$ | | | |
| ⋮ | | | |
| S$_{r,Cn}$ | | | |

FROM PROPAGATION CHANNEL ESTIMATION UNIT 304/
PROPAGATION CHANNEL ESTIMATION VALUE STORAGE UNIT 305

# FIG. 6

```
          START
            │
            ▼           ┌S601
┌──────────────────────────┐
│ RECEPTION SIGNAL ACQUISITION │
└──────────────────────────┘
            │
            ▼           ┌S602
┌──────────────────────────┐
│  PROPAGATION CHANNEL      │
│    COMPENSATION           │
└──────────────────────────┘
            │
            ▼           ┌S603
┌──────────────────────────┐
│         LOOP L1          │
└──────────────────────────┘
            │
            ▼           ┌S604
┌──────────────────────────┐
│  DEMODULATION AND        │
│    RATE MATCHING         │
└──────────────────────────┘
            │
            ▼           ┌S605
┌──────────────────────────┐
│        SYNTHESIS         │
└──────────────────────────┘
            │
            ▼           ┌S606
┌──────────────────────────┐
│         DECODE           │
└──────────────────────────┘
            │
            ▼           ┌S607
┌──────────────────────────┐
│         LOOP L1          │
└──────────────────────────┘
            │
            ▼           ┌S608
┌──────────────────────────┐
│         LOOP L2          │
└──────────────────────────┘
            │
            ▼           ┌S609
┌──────────────────────────┐
│         LOOP L3          │
└──────────────────────────┘
            │
            ▼           ┌S610
┌──────────────────────────┐
│    REPLICA GENERATION    │
└──────────────────────────┘
            │
            ▼           ┌S611
┌──────────────────────────┐
│         LOOP L3          │
└──────────────────────────┘
```

```
            ▼           ┌S612
┌──────────────────────────┐
│         LOOP L4          │
└──────────────────────────┘
            │
            ▼           ┌S613
┌──────────────────────────┐
│  INTERFERENCE CANCELLATION │
└──────────────────────────┘
            │
            ▼           ┌S614
┌──────────────────────────┐
│  PROPAGATION CHANNEL      │
│    COMPENSATION           │
└──────────────────────────┘
            │
            ▼           ┌S615
┌──────────────────────────┐
│  DEMODULATION            │
│  AND RATE MATCHING       │
└──────────────────────────┘
            │
            ▼           ┌S616
┌──────────────────────────┐
│        SYNTHESIS         │
└──────────────────────────┘
            │
            ▼           ┌S617
┌──────────────────────────┐
│         DECODE           │
└──────────────────────────┘
            │
            ▼           ┌S618
┌──────────────────────────┐
│         LOOP L4          │
└──────────────────────────┘
            │
            ▼           ┌S619
┌──────────────────────────┐
│         LOOP L2          │
└──────────────────────────┘
            │
            ▼
          END
```

FIG. 7

FIG. 8

EP 2 247 017 A1

# FIG. 9

INITIAL TRANSMISSION PACKET

RETRANSMISSION PACKET

| ACK₂ |
| ACK₁ |

| P₂ |
| P₁ |

| NACK₁ | ▨▨ | P₃ |

BASE STATION

S401 — DOWNLINK DATA SIGNAL

S402 — UPLINK SUCCESS/FAILURE INFORMATION SIGNAL

DOWNLINK DATA SIGNAL

UPLINK SUCCESS/FAILURE INFORMATION SIGNAL

INITIAL TRANSMISSION

DETECTION

| P₂ |
| P₁ |

ERROR
ERROR | NACK₁ |

S403

RETRANSMISSION

S404

TERMINAL (INITIAL TRANSMISSION)

NACK REPORT/PACKET SELECTION

DETECTION

STORE | P₂ |
| P₁ |

| P₃ |

NO ERROR | ACK₂ |
NO ERROR | ACK₁ |

TERMINAL (RETRANSMISSION)

SYNTHESIS

EP 2 247 017 A1

# FIG. 10

1000 : TRANSMISSION DEVICE

1009

1002

1003  1004  1006  1007  1008

CODE MULTIPLEXING UNIT

INTERLEAVER UNIT

IFFT UNIT

MULTIPLEXING UNIT

GI INSERTION UNIT

RADIO TRANSMISSION UNIT

1014  1015  1016  1017

CODING UNIT

RATE MATCHING UNIT

MODULATION UNIT

SPREADING UNIT

1018

CODED BIT STORAGE UNIT

INFORMATION BITS

1001-N

1001-1

1005

PILOT SIGNAL GENERATION UNIT

1012

RETRANSMISSION CONTROL UNIT

RETRANSMISSION CONTROL SIGNAL GENERATION UNIT

1013

1011  1010

SEPARATION UNIT

RADIO RECEPTION UNIT

SUCCESS/FAILURE INFORMATION

UPLINK DATA

EP 2 247 017 A1

# FIG. 11

1100 : RECEPTION DEVICE

INFORMATION BITS

SUCCESS/FAILURE INFORMATION

UPLINK DATA

EP 2 247 017 A1

# FIG. 12

1200 : RECEPTION DEVICE

EP 2 247 017 A1

FIG. 13

# FIG. 14

1400 : TRANSMISSION DEVICE

1409-1
1409-N

INFORMATION BITS →

| 1414 CODING UNIT | 1415 RATE MATCHING UNIT | 1416 MODULATION UNIT |

1418 CODED BIT STORAGE UNIT

1403 INTERLEAVER UNIT
1404 IFFT UNIT
1406 MULTIPLEXING UNIT
1407 GI INSERTION UNIT
1408 RADIO TRANSMISSION UNIT

1405 PILOT SIGNAL GENERATION UNIT

1412 RETRANSMISSION CONTROL UNIT

1413 RETRANSMISSION CONTROL SIGNAL GENERATION UNIT

1411 SEPARATION UNIT

1410 RADIO RECEPTION UNIT

SUCCESS/FAILURE INFORMATION

UPLINK DATA ←

1401-N
1401-1

EP 2 247 017 A1

## FIG. 15

1500 : RECEPTION DEVICE

FIG. 16

EP 2 247 017 A1

# FIG. 17

START

_S1701
RECEPTION SIGNAL ACQUISITION

_S1702
LOOP L5

_S1703
LOOP L6

_S1704
MIMO SEPARATION

_S1705
DEMODULATION AND RATE MATCHING

_S1706
SYNTHESIS

_S1707
DECODE

_S1708
REPLICA GENERATION

_S1709
INTERFERENCE CANCELLATION

_S1710
LOOP L6

_S1711
LOOP L5

END

### INTERNATIONAL SEARCH REPORT

| International application No. |
| --- |
| PCT/JP2009/052632 |

A.  CLASSIFICATION OF SUBJECT MATTER
*H04L1/16*(2006.01)i, *H04B1/707*(2006.01)i, *H04J11/00*(2006.01)i, *H04J99/00*
(2009.01)i, *H04L29/08*(2006.01)i

According to International Patent Classification (IPC) or to both national classification and IPC

B.  FIELDS SEARCHED

Minimum documentation searched (classification system followed by classification symbols)
H04L1/16, H04B1/707, H04J11/00, H04J99/00, H04L29/08

Documentation searched other than minimum documentation to the extent that such documents are included in the fields searched
Jitsuyo Shinan Koho        1922-1996    Jitsuyo Shinan Toroku Koho    1996-2009
Kokai Jitsuyo Shinan Koho    1971-2009    Toroku Jitsuyo Shinan Koho    1994-2009

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X<br>A | Tatsunori YUI et al., "ICI Canceller o Mochiiru Turbo Fugoka MC-CDMA ni Okeru Hantei Kikan Channel Suitei", IEICE Technical Report, The Institute of Electronics, Information and Communication Engineers, 11 October, 2007 (11.10.07), pages 7 to 12, RCS 107(262) | 10<br>1-9,1-29 |
| X<br>A | Koichi ADACHI et al., "Kurikaeshi Henkei QRD-M Shingo Bunriho o Mochiiru OFDM MIMO no HARQ Throughput Tokusei", IEICE Technical Report, The Institute of Electronics, Information and Communication Engineers, 2007.07, pages 47 to 52, RCS 107(147) | 10<br>1-9,11-29 |

☒  Further documents are listed in the continuation of Box C.   ☐  See patent family annex.

| | |
| --- | --- |
| *      Special categories of cited documents: | "T"   later document published after the international filing date or priority date and not in conflict with the application but cited to understand the principle or theory underlying the invention |
| "A"   document defining the general state of the art which is not considered   to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search<br>08 May, 2009 (08.05.09) | Date of mailing of the international search report<br>19 May, 2009 (19.05.09) |
| --- | --- |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2009/052632

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2006-238423 A  (Matsushita Electric Industrial Co., Ltd.), 07 September, 2006 (07.09.06), Abstract; Par. Nos. [0040] to [0045] & US 2009/0016263 A1    & WO 2006/080352 A1 & CN 101133670 A | 1-29 |
| A | WO 2006/64857 A1  (Matsushita Electric Industrial Co., Ltd.), 22 June, 2006 (22.06.06), Full text & EP 1821440 A1        & CN 1790976 A & KR 10-2007-0086267 A  & CN 101080893 A | 1-29 |
| A | WO 2007/61016 A1  (Matsushita Electric Industrial Co., Ltd.), 31 May, 2007 (31.05.07), Full text & CN 1972176 A | 1-29 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008040229 A
- JP 2004221702 A
- JP 2005198223 A

**Non-patent literature cited in the description**

- **Y. Zhou ; J. Wang ; M. Sawahashi.** Downlink Transmission of Broadband OFCDM Systems-Part I: Hybrid Detection. *IEEE Transaction on Communication,* April 2005, vol. 53 (4), 718-729
- **D. Chase.** Code combining-A maximum likelihood decoding approach for combing and arbitrary number of noisy packets. *IEEE Trans. Commun.,* May 1985, vol. COM-33, 385-393
- **J. Hagenauer.** Rate-compatible punctured convolutional codes (RCPC codes) and their application. *IEEE Trans. Commun.,* April 1988, vol. 36, 389-400